# EUROPÄISCHE PATENTSCHRIFT

(11) **EP 4 426 977 B1**
(45) Veröffentlichungstag und Bekanntmachung des Hinweises auf die Patenterteilung: **12.08.2026**
(21) Anmeldenummer: 22813937.4
(22) Anmeldetag: 03.11.2022
(51) Int. Cl.: F24S 20/20, F24S 90/00, F24S 10/70, F24S 23/77, F24S 60/00, F27B 1/08, F27B 3/20, F27B 9/06, F27D 99/00

(54) **VERFAHREN UND VERARBEITUNGSSYSTEM ZUM ERWÄRMEN UND WEITERVERARBEITEN VON METALLHALTIGEN PRODUKTEN UNTER NUTZUNG VON SOLARTHERMIE**
METHOD AND PROCESSING SYSTEM FOR HEATING AND FURTHER PROCESSING METAL CONTAINING PRODUCTS USING SOLAR THERMAL ENERGY
PROCÉDÉ ET SYSTÈME DE TRAITEMENT POUR LE CHAUFFAGE ET LE TRAITEMENT ULTÉRIEUR DE PRODUITS CONTENANT DU MÉTAL À L'AIDE DE LA CHALEUR SOLAIRE

(30) Priorität: 05.11.2021 DE 102021128851
(43) Veröffentlichungstag der Anmeldung: 11.09.2024
(73) Patentinhaber: SMS group GmbH, 41069 Mönchengladbach (DE)
(72) Erfinder: KLEIN, Carsten Andreas, 40237 Düsseldorf (DE); OUDEHINKEN, Heinz-Jürgen, 45149 Essen (DE); REIFFERSCHEID, Markus, 41352 Korschenbroich (DE); FELDHAUS, Stephan, 8610 Uster (CH)
(74) Vertreter: Richly & Ritschel Patentanwälte PartG mbB
(86) Internationale Anmeldenummer: PCT/EP2022/080708
(87) Internationale Veröffentlichungsnummer: WO 2023/079015

(56) Entgegenhaltungen:
- DE-A1- 102011 090 094
- DE-A1- 102013 211 249
- US-A1- 2006 188 433
- US-A1- 2011 135 566
- US-A1- 2015 308 715
- US-A1- 2016 208 362
- US-A1- 2019 346 177
- "Forschungsprogramm Wasserstoff", 21 June 2012 (2012-06-21), XP055072038, Retrieved from the Internet <URL:http://www.bfe.admin.ch/php/modules/enet/streamfile.php?file=000000010836.pdf&name=000000290612> [retrieved on 20130719]
- BRKIC MAJK ET AL: "Solar carbothermal reduction of aerosolized ZnO particles under vacuum: Modeling, experimentation, and characterization of a drop-tube reactor", CHEMICAL ENGENEERING JOURNAL, ELSEVIER, AMSTERDAM, NL, vol. 313, 30 December 2016 (2016-12-30), pages 435 - 449, XP029900753, ISSN: 1385-8947, DOI: 10.1016/J.CEJ.2016.12.057
- CHUAYBOON SRIRAT ET AL: "Combined ZnO reduction and methane reforming for co-production of pure Zn and syngas in a prototype solar thermochemical reactor", FUEL PROCESSING TECHNOLOGY, ELSEVIER BV, NL, vol. 211, 10 September 2020 (2020-09-10), XP086325405, ISSN: 0378-3820, [retrieved on 20200910], DOI: 10.1016/J.FUPROC.2020.106572

## Beschreibung

Die vorliegende Erfindung betrifft ein Verfahren zum Erwärmen von metallhaltigen Produkten unter Verwendung von konzentrierter Sonnenstrahlung und zum Weiterverarbeiten der mittels konzentrierter Sonnenstrahlung erwärmten metallhaltigen Produkte. Ferner betrifft die vorliegende Erfindung ein Verarbeitungssystem zum Erwärmen von metallhaltigen Produkten unter Verwendung von konzentrierter Sonnenstrahlung und zum Weiterverarbeiten der mittels konzentrierter Sonnenstrahlung erwärmten metallhaltigen Produkte.

In diversen Prozessen der Herstellung von metallhaltigen Produkten sind zum Teil erhebliche Wärmemengen notwendig. Diese Wärme wird heutzutage auf verschiedene Weise bereitgestellt. Bekannte Verfahren nutzen zum Beispiel Brennerinstallationen, in denen Erdgas, Kokereigas, Hochofengas oder ähnliche Energieträger verbrannt werden. Hierbei werden erhebliche Mengen von Kohlendioxid erzeugt. Weiterhin sind Brenner bekannt, die dazu geeignet sind, Wasserstoff zu verbrennen. Auch bei der Produktion von Wasserstoff fallen erhebliche Mengen von Kohlendioxid an, wenn zu dessen Herstellung keine erneuerbaren Energiequellen verwendet werden. Im Weiteren gibt es eine Reihe von elektrischen Beheizungsmöglichkeiten, darunter Lichtbogenöfen, in denen die vom Lichtbogen emittierte Strahlung das metallische Gut aufheizen, Widerstandsheizungen, in denen Strom durch Ohmsche Heizung einen Strahler aufheizt, der wiederum mittels der emittierten Strahlung ein metallhaltiges Gut erwärmt, Induktionsheizungen, in denen Ströme direkt im metallhaltigen Gut induziert werden, die ihrerseits durch Ohmsche Heizung das metallhaltige Gut direkt erwärmen, direkte Widerstandsheizung, bei der das metallhaltige Gut direkt in einen Stromkreis eingebunden wird und aufgrund seines eigenen Widerstands erwärmt wird u. v. m. Bei der Erzeugung dieses elektrischen Stroms werden ebenfalls große Mengen von Kohlendioxid erzeugt, wenn zu dessen Herstellung keine erneuerbaren Energiequellen verwendet werden. Elektrischer Strom wird heutzutage auf vielfältige Weise erzeugt. Hierzu werden erneuerbare und nicht-erneuerbare Energiequellen verwendet. Zu den erneuerbaren Energiequellen gehören insbesondere Sonnenenergie, Wasserkraft und Windenergie. Sonnenenergie wird mittels Solarzellen in elektrischen Strom gewandelt, der anschließend bedarfsgerecht eingesetzt werden kann.

Zu den nicht erneuerbaren Energiequellen gehören Kernenergie, Öl-, Gas-, Kohlekraftwerke.

Die US 2015/308715 A1 beschreibt ein Verfahren und ein System zum Aufschmelzen von metallhaltigen Produkten. Das System weist einen Receiver zum Empfangen von konzentrierter Sonnenstrahlung auf, wobei das metallhaltige Produkt über eine Fördereinrichtung in den Receiver transportiert wird. Innerhalb des Receivers wird das metallhaltige Produkt aufgeschmolzen. Das aufgeschmolzene Material wird einer Gussmaschine zur Erzeugung von Metallbauteilen zugeführt.

Die DE 10 2011 090094 A1 beschreibt ein Stahlwerk zur Erzeugung von Flüssigstahl zum Einschmelzen von metallhaltigen Feststoffen, wobei das Stahlwerk ein Solarkraftwerk zur Versorgung eines Lichtbogenofens mit elektrischer Energie aufweist. Bei dem Stahlwerk wird die mittels des Solarkraftwerks gewonnene Wärmeenergie vor Übertragung auf die zu schmelzenden metallhaltigen Feststoffe immer in elektrische Energie umgewandelt.

Die US 2011/135566 A1 beschreibt eine Vorrichtung zur thermischen Wasserstoffherstellung in einer Gas-Festphasenreaktion. Hierzu wird durch Verwendung von Wärmeenergie unter Veränderung eines Oxidationszustandes eines Metalloxids Kohlendioxid reduziert.

Die DE 10 2013 211249 A1 beschreibt ein Verfahren zur thermochemischen Speicherung und Bereitstellung von Energie mittels reversibler Reaktionen. Hierzu wird Solarwärme während des Betriebs einer Solarthermieanlage verwendet, um ein Wärmeträgerfluid zu erhitzen und mittels des erhitzten Wärmeträgerfluids eine endotherme chemische Reaktion zwischen Sauerstoff und multivalenten Festkörper-Oxiden eines Wärmespeichermediums ablaufen zu lassen. Die gesamte thermische Energie kann bei vollständig reversiblen Reaktionen durch die Rückreaktion, die abläuft, wenn keine Sonnenstrahlung zur Verfügung steht, zurückgewonnen werden.

Die US 2016/208362 A1 beschreibt ein System und ein Verfahren zur kohlenstoffbasierten Reduktion von Metalloxiden. Das System weist einen Reaktor mit einem Reaktionsbehälter auf, der eine Heizvorrichtung zur Erwärmung von in dem Reaktionsbehälter befindlichen Metalloxid-Pellets aufweist. Die Heizvorrichtung kann den Reaktionsbehälter mittels konzentrierter Sonnenstrahlung erhitzen.

Die US 2006/188433 A1 beschreibt ein Verfahren zur Reduktion von Metalloxiden zur Wasserstoffherstellung in einem Hochtemperatur Solar-Aerosol-Strömungsreaktor sowie einen entsprechenden Solar- Aerosol-Strömungsreaktor. In einem Reaktor wird Metalloxid durch konzentrierte Sonnenstrahlung indirekt über die Erwärmung der äußeren Schutzhülle, der inneren Erwärmungshülle und der inneren Reaktionshülle erwärmt.

Die US 2019/346177 A1 beschreibt eine Vorrichtung und ein zugehöriges Verfahren zur Erhitzung eines Fluids unter Verwendung von Metall/ Metalloxiden als Wärmeträgerfluid und konzentrierter Sonnenstrahlung als Wärmequelle. In einer Vorrichtung wird ein Wärmeträgerfluid durch konzentrierte Sonnenstrahlung erhitzt. Ein druckbeaufschlagtes Gas wird durch die Gaseinlässe mit dem Wärmeträgerfluid in Kontakt gebracht und steigt unter Blasenbildung in einen Gasauffangbereich unter Aufnahme der Wärme des Wärmeträgerfluids auf.

Der Artikel "Forschungsprogramm Wasserstoff", datierend vo, 21. Juni 2012, XP0550732038, beschreibt einen solarthermischen Reaktor zur Herstellung von Wasserstoff und Synthesegas unter Verwendung von Ceriumoxid (CeO2) als Redoxkeramik.

Der Artikel "Solar carbothermal reduction of aerosolized ZnO particles under vacuum: Modeling, experimentation, and characterization of a drop-tube reactor", erschienen im Chemical Engeneering Journal, Amsterdam, Nl, Bd. 313, 30. Dezember 2026, Seiten 435-449, XP0299007853, ISSN: 1385-8947, DOI: 10.1016/J.CEJ.2016.12.057 beschreibt eine kohlenstoffbasierte Reduktion von Zinkoxid (ZnO) unter Verwendung von konzentrierter Sonnenstrahlung. In dem Tropfen-Solarreaktor wird Zinkoxid durch konzentrierte Sonnenstrahlung unter Einsatz von Kohlenstoff zu elementarem Zink reduziert. Die Wärme der konzentrierten Sonnenstrahlung wird dabei von einer in einer Quartzröhre angeordneten Graphitröhre an das Zinkoxid und den Kohlenstoff übertragen. Innerhalb der Quartzröhre herrscht ein Vakuum.

Der Artikel "Combined ZnO reduction and methane reforming for coproduction of pure Zn and syngas in a prototype solar thermochemical reactor", Fuel Processing Technology, Elsevier Bv, Nl, Bd.211, 10. September 2020, XP086325405, ISSN: 0378-3820 beschreibt eine kombinierte Zinkoxid-Reduktion (ZnO) und Synthesegasherstellung mittels konzentrierter Sonnenstrahlung. Hierzu weist ein Solarofen eine Aluminiumkavität auf, in welcher die Sonnenstrahlung durch einen Parabolspiegel konzentriert wird und ZnO unter Zugabe von Methan und Stickstoff zu Zink reduziert wird.

Der vorliegenden Erfindung liegt die Aufgabe zugrunde, ein Verfahren zum Erwärmen und zum Weiterverarbeiten von zumindest einem metallhaltigen Produkt bereitzustellen, mittels dem im Vergleich zu aus dem Stand der Technik bekannten Verfahren eine erhebliche Reduktion der Emission von Treibhausgasen und insbesondere eine Reduktion der Emission von Kohlendioxid realisiert ist.

Die der vorliegenden Erfindung zugrundeliegende Aufgabe wird durch ein Verfahren mit den in Anspruch 1 angegebenen Merkmalen gelöst. Ausgestaltungen des Verfahrens sind in den von Anspruch 1 abhängigen Ansprüchen beschrieben.

Im Genaueren wird die der vorliegenden Erfindung zugrundeliegende Aufgabe durch ein Verfahren zum Erwärmen und zum Weiterverarbeiten von metallhaltigen Produkten gelöst, wobei das Verfahren einen Verfahrensschritt zum Erwärmen eines Primär-Wärmetransportfluids mittels konzentrierter Sonnenstrahlung aufweist, dem sich ein Verfahrensschritt zum Übertragen von Wärmeenergie des Primär-Wärmetransportfluids auf das metallhaltige Produkt anschließt, dem wiederum ein Verfahrensschritt zum Verarbeiten des erwärmten metallhaltigen Produkts folgt, wobei das Verarbeiten des erwärmten metallischen Produkts ein mechanisches Umformen und/oder Pressen und/oder Tempern und/oder Glühen ist.

Das erfindungsgemäße Verfahren weist den Vorteil auf, dass zum Erwärmen und Weiterverarbeiten eines metallhaltigen Produkts erheblich weniger und gegebenenfalls keine Energie benötigt wird, die aus fossilen Brennstoffen oder mittels Kernkraft gewonnen wird. Folglich wird beim Erwärmen und dem anschließenden Weiterverarbeiten eines metallhaltigen Produkts erheblich weniger und gegebenenfalls kein Kohlendioxid erzeugt.

Aufgrund der Nutzung von konzentrierter Sonnenstrahlung und somit aufgrund der Nutzung von Solarthermie weist das erfindungsgemäße Verfahren einen hohen Wirkungsgrad hinsichtlich des zur Erwärmung genutzten Energieanteils der Sonnenstrahlung auf. Aufgrund der Verwendung von konzentrierter Sonnenstrahlung können im Bereich von oder mehr als 30% der Strahlungsenergie der konzentrierten Sonnenstrahlung zur Erwärmung des eines metallischen Produkts genutzt werden. Dieser Wirkungsgrad ist erheblich höher als bei einer Nutzung von Photovoltaik. Denn bei einer Nutzung von Photovoltaik wird Sonnenlicht zur Erzeugung von elektrischer Energie genutzt, wobei im industriellen Maßstab nutzbare Photovoltaikmodule einen Wirkungsgrad von circa 25% aufweisen. Folglich wird lediglich 25% der Energie der Sonnenstrahlung in elektrische Energie umgewandelt. Diese elektrische Energie muss noch in Wärmeenergie umgewandelt werden, was den Gesamtwirkungsgrad bis zur Erwärmung des metallhaltigen Produkts nochmals reduziert.

Die Übertragung der Wärmeenergie des Primär-Wärmetransportfluids auf das metallhaltige Produkt erfolgt beispielsweise in einem Ofen. Unter einem Ofen ist eine Einrichtung zu verstehen, die einen vorgegebenen Raumbereich auf eine größere Temperatur als eine den vorgegebenen Raumbereich benachbarten Raumbereich erwärmen kann. Beispielsweise ist der Ofen als Schmelzofen oder als Tunnelofen oder als Wiedererwärmungsofen oder als Glühofen oder als Haubenofen oder als Wärmebehandlungslinie oder als Schwebebandofen ausgebildet. Der Ofen wird beispielsweise von dem Wärmetransportfluid durchströmt. Erfindungsgemäß bestehen hinsichtlich der Ausgestaltung des Ofens keinerlei Einschränkungen.

Das metallhaltige Produkt kann jedes Produkt sein, das zumindest ein Metall **(z.B.** Eisen, Kupfer, Aluminium, Nickel, Zinn, Titan oder eine zumindest ein dieser Metalle aufweisende Legierung) aufweist. Unter einem metallhaltigen Produkt ist beispielsweise ein Metall aufweisendes Halbzeug (z.B. eine Bramme oder ein Knüppel, usw.) und/oder Schrott und/oder Eisenschwamm (das auch als DRI (englische Abkürzung für Direct Reduced Iron) bezeichnet wird) und/oder HBI (englische Abkürzung für Hot Briquetted Iron) oder dergleichen zu verstehen. Auch bezüglich des metallhaltigen Produkts bestehen erfindungsseitig keinerlei Einschränkungen. Im Sinne der Erfindung sind Erze, insbesondere Eisenerz kein metallhaltiges Produkt.

Unter einem Verarbeiten des metallhaltigen Produkts ist ein mechanisches Umformen (z.B. Walzen) und/oder Pressen und/oder Tempern, und/oder Glühen zu verstehen.

Das Primär-Wärmetransportfluid wird mittels der konzentrierten Sonnenstrahlung vorzugsweise auf eine Temperatur im Bereich zwischen 500°C bis 1700°C, vorzugsweise im Bereich zwischen 700°C bis 1700°C, weiter vorzugsweise im Bereich zwischen 800°C bis 1650°C, weiter vorzugsweise im Bereich zwischen 900°C bis 1650°C, weiter vorzugsweise im Bereich zwischen 900°C bis 1600°C, weiter vorzugsweise im Bereich zwischen 1100°C bis 1650°C, weiter vorzugsweise im Bereich zwischen 1200°C bis 1600°C, weiter vorzugsweise im Bereich zwischen 1300°C bis 1600°C, weiter vorzugsweise im Bereich zwischen 1400°C bis 1550°C, weiter vorzugsweise im Bereich zwischen 1400°C bis 1500°C erwärmt.

Beispielsweise ist das Verfahren derart ausgebildet, dass das Primär-Wärmetransportfluid mittels konzentrierter Sonnenstrahlung auf eine Temperatur im Bereich zwischen 1500°C bis 1600°C, weiter vorzugsweise auf 1550°C erwärmt wird. Dieser Temperaturbereich ist besonders geeignet zum Schmelzen von Schrott und/oder von direkt reduziertem Eisen.

Beispielsweise ist das Verfahren derart ausgebildet, dass das Primär-Wärmetransportfluid mittels konzentrierter Sonnenstrahlung auf eine Temperatur im Bereich zwischen 600°C bis 850°C erwärmt wird. Dieser Temperaturbereich ist besonders geeignet zum Vorheizen von Schrott und/oder von direkt reduziertem Eisen.

Beispielsweise ist das Verfahren derart ausgebildet, dass das Primär-Wärmetransportfluid mittels konzentrierter Sonnenstrahlung auf eine Temperatur im Bereich zwischen 800°C bis 1250°C, vorzugsweise zwischen 900°C und 1200°C, weiter vorzugsweise zwischen 1000°C und 1150 °C und nochmals weiter vorzugsweise auf 1200°C erwärmt wird. Dieser Temperaturbereich ist besonders geeignet zum Wiedererhitzen von Brammen und/oder Knüpplen oder anderen eisenhaltigen Halbzeugen vor der Weiterverarbeitung.

Beispielsweise ist das Verfahren derart ausgebildet, dass das Primär-Wärmetransportfluid mittels konzentrierter Sonnenstrahlung auf eine Temperatur im Bereich zwischen 500°C bis 800°C, vorzugsweise zwischen 550°C und 750°C, weiter vorzugsweise zwischen 600°C bis 700°C, und nochmals weiter vorzugsweise auf 650°C erwärmt wird. Dieser Temperaturbereich ist besonders geeignet zum Tempern, Glühen von Bändern und/oder Blechen oder anderen eisenhaltigen Halbzeugen.

Beispielsweise ist das Verfahren derart ausgebildet, dass das Primär-Wärmetransportfluid mittels konzentrierter Sonnenstrahlung auf eine Temperatur im Bereich zwischen 600°C bis 900°C, vorzugsweise zwischen 650°C und 850°C, weiter vorzugsweise zwischen 700°C bis 800°C, weiter nochmals weiter vorzugsweise auf 750°C erwärmt wird. Dieser Temperaturbereich ist besonders geeignet zum Durchlaufglühen von Brammen und/oder Knüpplen und/oder Bändern und/oder Blechen oder anderen eisenhaltigen Halbzeugen.

Beispielsweise ist das Verfahren derart ausgebildet, dass Eisenerz mittels des Primär-Wärmetransportfluids, das zumindest mittelbar mittels konzentrierter Sonnenstrahlung erwärmt wurde, auf eine Temperatur im Temperaturbereich zwischen 100°C und 1500°C, vorzugsweise auf eine Temperatur im Temperaturbereich zwischen 500°C und 1000°C erwärmt wird. Dies ist insbesondere vorteilhaft bei Verarbeitung des Eisenerzes in einem Hochofen, da zur Erwärmung des Eisenerzes weniger Energie benötigt wird, die üblicherweise über die Verbrennung von Koks zur Verfügung gestellt wird. Ferner ist es durch Vorwärmung des Eisenerzes möglich, im Hochofenprozess das Verhältnis von Koks zu Erz zu reduzieren. Der Hochofenprozess dient der Erzeugung von Roheisen, welches als Ausgangsstoff der Stahlproduktion dient. Die Reduktion des Erzes ist ein notwendiger Schritt dazu.

Beispielsweise ist das Verfahren derart ausgebildet, dass Schrott und/oder Eisenschwamm (das auch als DRI (englische Abkürzung für Direct Reduced Iron) bezeichnet wird) und/oder HBI (englische Abkürzung für Hot Briquetted Iron) zumindest mittelbar mittels des Primär-Wärmetransportfluids, das mittels konzentrierter Sonnenstrahlung erwärmt wurde, auf eine Temperatur im Temperaturbereich zwischen 100°C und 1500°C, vorzugsweise auf eine Temperatur im Temperaturbereich zwischen 500°C und 1000°C erwärmt wird. Dies ist insbesondere vorteilhaft bei Verarbeitung des Schrotts und/oder des DRI und/oder des HBI beim Einschmelzen in einem Elektrolichtbogenofen oder in einem Induktionsofen oder in einem Konverter. Das Schmelzen dieser Eisenträger ist erforderlich, um die gewünschte Legierungszusammensetzung zu erwirken und die notwendigen Produktformate (für die jeweiligen späteren Anwendungen) gießen zu können.

Beispielsweise ist das Verfahren derart ausgebildet, dass Legierungsmittel und/oder Schlackenbildner mittels des Primär-Wärmetransportfluids, das zumindest mittelbar mittels konzentrierter Sonnenstrahlung erwärmt wurde, auf eine Temperatur im Temperaturbereich zwischen 100°C und 1500°C, vorzugsweise auf eine Temperatur im Temperaturbereich zwischen 500°C und 1000°C erwärmt wird. Dies ist insbesondere vorteilhaft bei Verarbeitung in einem Pfannenofen.

Beispielsweise ist das Verfahren derart ausgebildet, dass Brammen zumindest mittelbar mittels des Primär-Wärmetransportfluids, das mittels konzentrierter Sonnenstrahlung erwärmt wurde, auf eine Temperatur im Temperaturbereich zwischen 1000°C und 1300°C, vorzugsweise auf eine Temperatur im Temperaturbereich zwischen 1100°C und 1200°C erwärmt wird. Dies ist insbesondere vorteilhaft bei Verarbeitung der Brammen in einem Tunnelofen. Im CSP-Prozess oder ähnlichen Verfahren mit Kombination aus Gießen und Walzen sind die Brammen oftmals etwas zu kalt für eine effiziente und werkstofftechnisch vorteilhafte Warmumformung. Zudem ist das Temperaturprofil im Inneren der Brammen nach dem Gießen nicht gleichmäßig. Um sowohl das Temperaturniveau für eine effiziente Warmumformung anzuheben und gleichzeitig die Temperatur einer Bramme zu vergleichmäßigen werden Tunnelöfen genutzt ("Rollenherdöfen" - eine Abfolge von Rollen über die die Brammen transportiert werden, eingehaust von einem Ofen, welcher über Brenner geheizt wird).

Beispielsweise ist das Verfahren derart ausgebildet, dass metallische Halbzeuge zumindest mittelbar mittels des Primär-Wärmetransportfluids, das mittels konzentrierter Sonnenstrahlung erwärmt wurde, auf eine Temperatur im Temperaturbereich zwischen 800°C und 1300°C, vorzugsweise auf eine Temperatur im Temperaturbereich zwischen 900°C und 1250°C erwärmt wird. Für die effiziente Warmumformung in Warmwalzwerken werden die Brammen, Knüppel oder Blöcke (im Allgemeinen: die metallischen Halbzeuge) aus den vorgeschalteten Gießprozessen aufgeheizt. Da Gießen und Walzen oftmals voneinander entkoppelt sind, wird oftmals Kalteinsatz praktiziert, d.h. die Brammen, Knüppel oder Blöcke werden nahezu mit Raumtemperatur in einen Ofen gegeben. Für die Warmumformung ist es vorteilhaft, wenn das Temperaturniveau hoch ist, da dann der Umformwiderstand der Produkte geringer wird. Da Stahl zudem (je nach Legierung) ab etwa 900 °C eine Phasenumwandlung durchläuft, die zumeist vermieden werden soll (Ausnahmen: ferritisches Walzen, ggfs. thermomechanisches Walzen), eine nennenswerte Energiezufuhr und Temperaturerhöhung aber innerhalb der Anlagen nur schwerlich möglich ist, muss die Starttemperatur der Walzprozesse ausreichend hoch gewählt sein. Weiterhin ist es erstrebenswert, eine weitestgehende Rekristalllisation des Gefüges zwischen den Umformschritten zu erreichen. Da diese stark temperaturgesteuert abläuft, ist auch hier auf ein ausreichend hohes Temperaturniveau zu achten.

Beispielsweise ist das Verfahren derart ausgebildet, dass ein Stahlband zumindest mittelbar mittels des Primär-Wärmetransportfluids, das mittels konzentrierter Sonnenstrahlung erwärmt wurde, auf eine Temperatur im Temperaturbereich zwischen 0°C und 100°C, vorzugsweise auf eine Temperatur im Temperaturbereich zwischen 60°C und 80°C erwärmt wird. Das Stahlband wird gebeizt, um die bei der Warmumformung entstehende Zunderschicht (Eisenoxid) für eine nachfolgende Kaltumformung und ggfs. Beschichtung zu entfernen. Hierbei durchläuft das Stahlband warme/heiße Säurebäder (80-90 °C). Die hohe Temperatur ist erforderlich, um die chemischen Reaktionen ausreichend schnell ablaufen zu lassen, so dass ein hoher Durchsatz an Stahlband bei gegebener Anlagenlänge ermöglicht wird. Die Reaktionsraten sind stark temperaturabhängig. Im Normalfall tritt das Band mit Umgebungstemperatur in die Beizbecken ein und wird erst durch das Säurebad aufgewärmt, so dass eine erhebliche Wärmeleistung erforderlich ist, die Bäder auf Prozesstemperatur zu halten. Durch eine Vorwärmung des Metallbandes lässt sich eine Leistungssteigerung erwirken und die Erwärmung der Säure kann effizienter gestaltet werden.

Beispielsweise ist das Verfahren derart ausgebildet, dass ein metallhaltiges Produkt (vorzugsweise ein Produkt, das Stahl aufweist) zumindest mittelbar mittels des Primär-Wärmetransportfluids, das mittels konzentrierter Sonnenstrahlung erwärmt wurde, auf eine Temperatur im Temperaturbereich zwischen 100°C und 800°C, vorzugsweise auf eine Temperatur im Temperaturbereich zwischen 650°C und 800°C erwärmt wird. Nach einer Kaltumformung sind Stahlwerkstoffe weniger duktil und formbar. Um ein besseres Umformvermögen wiederherzustellen kann das Material rekristallisierend geglüht werden. Hierbei findet eine Umstrukturierung der Körner des Gefüges statt. Diese Erwärmung in einem Ofen wir auch als Kontiglühe bezeichnet.

Beispielsweise ist das Verfahren derart ausgebildet, dass ein metallhaltiges Produkt (vorzugsweise ein Produkt, das Edelstahl oder RSH-Stähle (Rost-, Säure-, Hitzebeständige Stähle) aufweist) zumindest mittelbar mittels des Primär-Wärmetransportfluids, das mittels konzentrierter Sonnenstrahlung erwärmt wurde, auf eine Temperatur im Temperaturbereich zwischen 100°C und 1200°C, vorzugsweise auf eine Temperatur im Temperaturbereich wischen 800°C und 1200°C erwärmt wird. Auch bei Edelstählen findet eine Wärmebehandlung statt. Dies wird üblicherweise sowohl nach der Warm-, wie nach der Kaltumformung durchgeführt. Die Erwärmung des metallhaltigen Produkts findet in einem Glühofen statt.

Beispielsweise ist das Verfahren derart ausgebildet, dass ein metallhaltiges Produkt zumindest mittelbar mittels des Primär-Wärmetransportfluids, das mittels konzentrierter Sonnenstrahlung erwärmt wurde, auf eine Temperatur im Temperaturbereich zwischen 100°C und 900°C, vorzugsweise auf eine Temperatur im Temperaturbereich wischen 750°C und 850°C erwärmt wird. Für AHSS (Advanced high Strength steels), speziell Dualphasen-, Complexphasen-, TRIP oder Q&P-Stähle findet eine Wärmebehandlung statt, mit dem Ziel bestimmte Phasenanteile der unterschiedlichen Tieftemperaturphasen von Stahl einzustellen (Austenit, Ferrit, Bainit, Martensit, Perlit, usw.). Hierzu wird das Material in einen Temperaturbereich erwärmt, in dem das Gefüge ganz oder teilweise als Austenit vorliegt und anschließend einem gezielten Kühlprozess unterworfen.

Beispielsweise ist das Verfahren derart ausgebildet, dass ein metallhaltiges Produkt zumindest mittelbar mittels des Primär-Wärmetransportfluids, das mittels konzentrierter Sonnenstrahlung erwärmt wurde, auf eine Temperatur im Temperaturbereich zwischen 100°C und 500°C, vorzugsweise auf eine Temperatur im Temperaturbereich wischen 450°C und 480°C erwärmt wird, bevor dieses einen Verarbeitungsschritt der Schmelztauchveredelung unterzogen wird. Stahl wird aus Korrosionsschutzgründen für viele weitere Anwendungen mit Zink beschichtet. In der Feuerverzinkung wird das Stahlband oder -stück in ein Bad mit flüssigem Zink getaucht. Nachdem das Stahlband bzw. das Stahlstück das Zinkbad verlassen hat, streifen Luftdüsen überschüssiges Zink ab. Das Zinkbad weist dabei Temperaturen von etwa 450 °C auf. Das entsprechend ausgebildete Verfahren weist den Vorteil auf, dass Beschichtungsfehler vermieden werden. Die Erfinder haben herausgefunden, dass das Stahlband hierzu eine Temperatur von etwa 470 °C beim Eintritt in das Zinkbad aufweisen soll, um eine gleichmäßige Beschichtung und Benetzung zu erwirken.

Beispielsweise ist das Verfahren derart ausgebildet, dass ein metallhaltiges Produkt, vorzugsweise ein Stahlprodukt zumindest mittelbar mittels des Primär-Wärmetransportfluids, das mittels konzentrierter Sonnenstrahlung erwärmt wurde, auf eine Temperatur im Temperaturbereich zwischen 100°C und 750°C, vorzugsweise auf eine Temperatur im Temperaturbereich wischen 500°C und 750°C in beispielsweise einem Haubenglühofen erwärmt wird. Als Verarbeitungsschritt ist hier eine Rekristallisation des metallhaltigen Produkts zu verstehen. Beim Kaltwalzen verfestigt Stahl. Diese Verfestigung ist für die weitere Umformung nachteilig. Die Verfestigung wird durch eine Wärmebehandlung mit der durch konzentrierte Sonnenstrahlung gewonnenen Wärmeenergie behoben. Bei der Wärmebehandlung wird das Stahlband erwärmt, so dass die durch die Kaltumformung deformierten Körner rekristallisieren und eine neue Kornstruktur gebildet wird.

Beispielsweise ist das Verfahren derart ausgebildet, dass ein metallhaltiges Produkt, vorzugsweise ein Stahlprodukt (z.B. ein Stahlband) zumindest mittelbar mittels des Primär-Wärmetransportfluids, das mittels konzentrierter Sonnenstrahlung erwärmt wurde, auf eine Temperatur im Temperaturbereich zwischen 0°C und 100°C, vorzugsweise auf eine Temperatur im Temperaturbereich wischen 70°C und 80°C erwärmt wird, bevor dieses elektrolytisch verzinkt oder verzinnt wird (Verarbeitungsschritt). Aus Gründen des Korrosionsschutzes wird Stahl verzinkt oder verzinnt. Hierzu wird beim elektrolytische Beschichtungsverfahren die Beschichtung durch elektrolytische Abscheidung aus einer Zink- bzw. Zinn-haltigen Lösung auf der Oberfläche abgeschieden. Zur Verbesserung der elektrischen Leitfähigkeit der Lösung sowie zur Einstellung geeigneter Temperaturfenster bzgl. der Löslichkeit der Metallionen wird eine erhöhte Badtemperatur angestrebt. Wenn kaltes Band in das Bad eintritt, führt dies aufgrund des hohen Massendurchsatzes zu einem Wärmebedarf. Dieser wird durch eine Vorwärmung des Bandes vermieden.

Beispielsweise ist das Verfahren derart ausgebildet, dass ein metallhaltiges Produkt, vorzugsweise ein Metallband (z.B. ein Aluminiumband oder ein Stahlband) zumindest mittelbar mittels des Primär-Wärmetransportfluids, das mittels konzentrierter Sonnenstrahlung erwärmt wurde, auf eine Temperatur im Temperaturbereich zwischen 0°C und 300°C, vorzugsweise auf eine Temperatur im Temperaturbereich wischen 150°C und 250°C erwärmt wird, um einen auf der Oberfläche aufgebrachten Lack in einem beispielsweise Schwebebandofen zu trocknen. Metallbänder werden für verschiedene Anwendungszwecke mit organischen Lacken beschichtet, um das optische Erscheinungsbildes und/oder den Korrosionsschutz und/oder die elektrische Isolierung zu beeinflussen. Der Lack wird dabei in flüssigem Zustand auf das Band aufgebracht. Um eine saubere und gleichmäßige Lackoberfläche zu erhalten, muss der Lack trocknen bevor er das nächste Mal in Kontakt zu anderen Anlagenteilen **(z.B.** Umlenkrollen) tritt. Die erforderliche Wärmeenergie zur Erwärmung von Lack und Band wird zumindest mittelbar von dem Primär-Wärmetransportfluid zugeführt, welches mittels konzentrierter Sonnenstrahlung erwärmt wurde.

Beispielsweise ist das Verfahren derart ausgebildet, dass ein metallhaltiges Produkt, vorzugsweise ein Grobblech zumindest mittelbar mittels des Primär-Wärmetransportfluids, das mittels konzentrierter Sonnenstrahlung erwärmt wurde, auf eine Temperatur im Temperaturbereich zwischen 0°C und 1000°C, vorzugsweise auf eine Temperatur im Temperaturbereich wischen 700°C und 1000°C erwärmt wird, beispielsweise in einer Wärmebehandlungslinie. Durch die Aufheizung finden Mikrostrukturprozesse statt. Anschließend wird durch gezielte Abkühlung ein gewünschtes Gefüge und damit die Gebrauchseigenschaften eingestellt.

Beispielsweise ist das Verfahren derart ausgebildet, dass ein metallhaltiges Produkt, vorzugsweise Aluminiumschrott zumindest mittelbar mittels des Primär-Wärmetransportfluids, das mittels konzentrierter Sonnenstrahlung erwärmt wurde, auf eine Temperatur im Temperaturbereich zwischen 0°C und 600°C, vorzugsweise auf eine Temperatur im Temperaturbereich wischen 300°C und 600°C erwärmt wird, beispielsweise in einem Erwärmungs- und/oder in einem Schmelzofen. Aluminiumschrott muss vor der erneuten Bearbeitung bzw. Verarbeitung eingeschmolzen werden. Um den Energiebedarf des eigentlichen Einschmelzens zu reduzieren, wird der Schrott zumindest mittelbar mittels des Primär-Wärmetransportfluids vorgewärmt.

Beispielsweise ist das Verfahren derart ausgebildet, dass ein metallhaltiges Produkt, vorzugsweise Aluminiumschrott zumindest mittelbar mittels des Primär-Wärmetransportfluids, das mittels konzentrierter Sonnenstrahlung erwärmt wurde, auf eine Temperatur im Temperaturbereich zwischen 0°C und 750°C, vorzugsweise auf eine Temperatur im Temperaturbereich wischen 650°C und 750°C erwärmt wird, beispielsweise in einem Schmelzofen. Aluminiumschrott wird eingeschmolzen um wieder verarbeitbares Aluminium zu erzeugen.

Beispielsweise ist das Verfahren derart ausgebildet, dass ein metallhaltiges Produkt, vorzugsweise ein Aluminium aufweisendes Halbzeug zumindest mittelbar mittels des Primär-Wärmetransportfluids, das mittels konzentrierter Sonnenstrahlung erwärmt wurde, auf eine Temperatur im Temperaturbereich zwischen 100°C und 600°C, vorzugsweise auf eine Temperatur im Temperaturbereich wischen 500°C und 580°C erwärmt wird. Anschließend wird das metallhaltige Produkt umgeformt, beispielsweise gewalzt.

Beispielsweise ist das Verfahren derart ausgebildet, dass ein metallhaltiges Produkt, vorzugsweise ein Aluminiumblock zumindest mittelbar mittels des Primär-Wärmetransportfluids, das mittels konzentrierter Sonnenstrahlung erwärmt wurde, auf eine Temperatur im Temperaturbereich zwischen 0°C und 500°C, vorzugsweise auf eine Temperatur im Temperaturbereich wischen 450°C und 550°C erwärmt wird. Anschließend wird das metallhaltige Produkt, beispielsweise der Aluminiumblock, umgeformt, vorzugsweise stranggepresst.

Beispielsweise ist das Verfahren derart ausgebildet, dass ein metallhaltiges Produkt, vorzugsweise ein Aluminiumprodukt zumindest mittelbar mittels des Primär-Wärmetransportfluids, das mittels konzentrierter Sonnenstrahlung erwärmt wurde, auf eine Temperatur im Temperaturbereich zwischen 0°C und 500°C, vorzugsweise auf eine Temperatur im Temperaturbereich wischen 350°C und 450°C erwärmt wird. Das metallhaltige Produkt, vorzugsweise das Aluminiumprodukt wird in einem Ofen vorzugsweise berührungslos geführt. Während und nach der Wärmebehandlung werden Kaltverfestigungen aufgehoben und/oder Legierungsbestandteile gelöst und/oder Ausscheidungsbildung gezielt gefördert. Somit wird das Gefüge des Aluminiumprodukts gezielt beeinflusst.

Beispielsweise ist das Verfahren derart ausgebildet, dass ein metallhaltiges Produkt, vorzugsweise Kupferkies zumindest mittelbar mittels des Primär-Wärmetransportfluids, das mittels konzentrierter Sonnenstrahlung erwärmt wurde, auf eine Temperatur im Temperaturbereich zwischen 0°C und 1300°C, vorzugsweise auf eine Temperatur im Temperaturbereich wischen 1100°C und 1200°C erwärmt wird. Währenddessen findest eine Umwandlung zu Kupferstein statt. Kupfererz wird mit Sauerstoff in Kupferstein umgewandelt um weiter verarbeitet werden zu können. Hierfür wird das noch eisenhaltige Erz geröstet wobei das unedlere Eisen als Oxid abgetrennt wird und Kupfersulfid übrigbleibt. Dieses kann dann reduziert und weiterveredelt werden.

Beispielsweise ist das Verfahren derart ausgebildet, dass beim Verfahrensschritt des Übertragens der Wärmeenergie des Primär-Wärmetransportfluids auf das metallhaltige Produkt die Wärmeenergie des Primär-Wärmetransportfluids vor der Übertragung auf das metallhaltige Produkt nicht in elektrische Energie umgewandelt wird.

Folglich wird die (konzentrierte) Sonnenstrahlung vor Erwärmung des metallhaltigen Produkts nicht in elektrische Energie **(z.B.** mittels Solarzellen) umgewandelt. Ferner wird auch die Wärmeenergie des Primär-Wärmetransportfluids nicht in elektrische Energie umgewandelt (beispielsweise mittels eines Generators), um anschließend eine Erwärmungseinrichtung mit der elektrischen Energie zu versorgen.

Das entsprechend ausgebildete Verfahren weist den Vorteil auf, dass das Primär-Wärmetransportfluid effizienter durch die konzentrierte Sonnenstrahlung erwärmt wird. Folglich wird auch das zu erwärmende metallhaltige Produkt effizienter erwärmt, so dass mittels der zur Verfügung stehenden konzentrierten Sonnenstrahlung eine größere Menge an metallhaltigem Produkt erwärmt werden kann.

Weiter beispielsweise ist das Verfahren derart ausgebildet, dass ein Teilstrom des Primär-Wärmetransportfluids zur Erzeugung von elektrischer Energie abgezweigt wird, wobei die elektrische Energie beispielsweise mittels eines Generators erzeugt wird. Diese elektrische Energie kann zur Versorgung einzelner Anlagenteile eines Verarbeitungssystems mit elektrischer Energie verwendet werden.

Vorzugsweise ist das Verfahren derart ausgebildet, dass innerhalb eines vorbestimmten Erwärmungszeitraums vor dem Verarbeiten des metallhaltigen Produkts ausschließlich mittels konzentrierter Sonnenstrahlung gewonnene Wärmeenergie des Primär-Wärmetransportfluids auf das metallhaltige Produkt übertragen wird.

Vorzugsweise ist das Verfahren derart ausgebildet, dass als Primär-Wärmetransportfluid zumindest ein Gas verwendet wird, ausgewählt aus der Gruppe bestehend aus Kohlendioxid, Wasserdampf, Methan, Ammoniak, Kohlenmonoxid, Schwefeldioxid, Schwefeltrioxid, Salzsäure, Stickstoffmonooxid, Stickstoffdioxid, Stickstoff, Luft und Mischungen davon.

Es ist auch möglich, dass das Primär-Wärmetransportfluid eine Salzschmelze aufweist oder eine Salzschmelze ist, wobei die Salzschmelze beispielsweise NaNO₃ und/oder KNO₃ aufweist. Weiter vorzugsweise weist das Primär-Wärmetransportfluid eine Metallschmelze auf oder ist eine Metallschmelze. Beispielsweise weist die Metallschmelze Zinn und/oder Zink und/oder Aluminium und/oder Blei auf.

Vorzugsweise ist das Verfahren derart ausgebildet, dass das Erwärmen des Primär-Wärmetransportfluids unmittelbar in einer von konzentrierter Sonnenstrahlung beschienenen Fluiderwärmungseinrichtung einer Solarthermieanlage erwärmt wird.

Beispielsweise strömt das Primär-Wärmetransportfluid durch die Fluiderwärmungseinrichtung, in die die von Reflektoren reflektierte Sonnenstrahlung konzentriert wird. Dabei wechselwirkt das Primär-Wärmetransportfluid unmittelbar mit der konzentrierten Sonnenstrahlung und wird von dieser erwärmt.

Vorzugsweise ist das Verfahren derart ausgebildet, dass ein Primär-Wärmetransportfluid verwendet wird, welches keine Festkörperbestandteile, insbesondere keine Keramikbestandteile aufweist.

Als Primär-Wärmetransportfluid kann beispielsweise ein Gas verwendet werden. Ein Primär-Wärmetransportfluid ohne Festkörperbestandteile weist den Vorteil auf, dass eine Transportvorrichtung (z.B. Rohre bzw. ein Rohrsystem) zum Transport des Wärmetransportfluids einem geringeren Verschleiß ausgesetzt ist. Ferner können sich keine Festkörperbestandteile in Bereichen der Transportvorrichtung ablagern, in denen kleinere Transportgeschwindigkeiten des Wärmetransportfluids vorliegen.

Es ist insbesondere besonders vorteilhaft, wenn das Primär-Wärmetransportfluid keine Keramikbestandteile, insbesondere kein Keramikpulver transportiert. Denn Keramikbestandteile führen zu einem besonders hohen Verschleiß der Transportvorrichtung.

Vorzugsweise weist das Verfahren einen Verfahrensschritt des Übertragens von Wärmeenergie des Primär-Wärmetransportfluids auf eine Wärmespeichereinrichtung und ein Verfahrensschritt des Übertragens von Wärmeenergie der Wärmespeichereinrichtung auf das metallhaltige Produkt auf.

Das entsprechend ausgebildete Verfahren weist den Vorteil auf, dass die Wärmeenergie, die mittels der konzentrierten Sonnenstrahlung gewonnen wird, auch in Zeitperioden verwendet werden kann, in denen keine oder eine vergleichsweise geringere Sonnenstrahlung zur Verfügung steht. Somit ist eine gleichmäßigere Erwärmung des metallhaltigen Produkts ermöglicht.

Beispielsweise ist das Verfahren derart ausgebildet, dass zum Übertragen von Wärmeenergie der Wärmespeichereinrichtung auf das metallhaltige Produkt das Primär-Wärmetransportfluid verwendet wird.

Als Wärmespeichereinrichtung kann beispielsweise ein Reservoir des Primär-Wärmetransportfluids dienen. Ferner kann beispielsweise ein sich von dem Primär-Wärmetransportfluid unterscheidendes Wärmetransportfluid (beispielsweise eine Salzschmelze, beispielsweise NaNO₃ und/oder KNO₃ aufweisend) als Wärmespeichereinrichtung verwendet werden. Ferner kann beispielsweise ein Festkörper als Wärmespeichereinrichtung verwendet werden. Hinsichtlich der Ausgestaltung des Festkörpers bestehen keine Einschränkungen. Der Festkörper kann beispielsweise Steine und/oder Beton und/oder Metallkörper oder dergleichen aufweisen.

Ferner ist es auch im Sinne des erfindungsgemäßen Verfahrens, dass Wärmeenergie des Primär-Wärmetransportfluids auf ein Sekundär-Wärmetransportfluid und/oder auf ein Tertiär-Wärmetransportfluid übertragen wird, wobei anschließend Wärmeenergie des Sekundär-Wärmetransportfluids und/oder des Tertiär-Wärmetransportfluids auf eine Wärmespeichereinrichtung übertragen wird. Somit wird die Wärmeenergie des Primär-Wärmetransportfluids mittelbar auf die Wärmespeichereinrichtung übertragen.

Als Wärmespeichereinrichtung kann auch ein Winderhitzer eines Hochofens ausgebildet sein. Ein entsprechend ausgebildetes Verfahren ermöglicht eine erhebliche Reduktion von Kohlendioxidemissionen im Hochofenprozess.

Vorzugsweise ist das Verfahren derart ausgebildet, dass die Übertragung von Wärmeenergie des Primär-Wärmetransportfluids auf die Wärmespeichereinrichtung in einem anderen Zeitfenster als die Übertragung von Wärmeenergie der Wärmespeichereinrichtung auf das metallische Produkt erfolgt. Beispielsweise ist das Verfahren derart ausgebildet, dass die Übertragung von Wärmeenergie des Primär-Wärmetransportfluids auf die Wärmespeichereinrichtung zeitlich vor der Übertragung von Wärmeenergie der Wärmespeichereinrichtung auf das metallische Produkt erfolgt.

Vorzugsweise weist das Verfahren einen Verfahrensschritt des Übertragens von Wärmeenergie des Primär-Wärmetransportfluids auf ein Sekundär-Wärmetransportfluid in einer Wärmetauschereinrichtung und einen Verfahrensschritt des Übertragens von Wärmeenergie des Sekundär-Wärmetransportfluids auf das metallhaltige Produkt in einer Erwärmungseinrichtung auf.

Das entsprechend ausgebildete Verfahren weist den Vorteil auf, dass die Wärmeenergie des Primär-Wärmetransportfluids für metallhaltige Produkte, die für die weitere Verarbeitung auf eine bedeutend niedrigere Temperatur als eine Temperatur des Primär-Wärmetransportfluids erwärmt werden sollen, verbessert nutzbar ist. Denn die Temperatur des Sekundär-Wärmetransportfluids ist niedriger als die Temperatur des Primär-Wärmetransportfluids.

Wie bereits oben beschrieben kann die Wärmespeichereinrichtung mittels des Sekundär-Wärmetransportfluids erwärmt werden. Ferner ist es auch möglich, dass eine erste Wärmespeichereinrichtung mittels des Primär-Wärmetransportfluids und eine zweite Wärmespeichereinrichtung mittels des Sekundär-Wärmetransportfluids erwärmt wird. Folglich wäre die erste Wärmespeichereinrichtung in einem Primär-Fluidkreislauf und die zweite Wärmespeichereinrichtung in einem Sekundär-Fluidkreislauf angeordnet.

Beispielsweise weist das Sekundär-Wärmetransportfluid eine Salzschmelze auf oder ist eine Salzschmelze, wobei die Salzschmelze beispielsweise NaNO₃ und/oder KNO₃ aufweist. Weiter vorzugsweise weist das Sekundär-Wärmetransportfluid eine Metallschmelze auf oder ist eine Metallschmelze. Beispielsweise weist die Metallschmelze Zinn und/oder Zink und/oder Aluminium und/oder Blei auf.

Vorzugsweise ist das Verfahren derart ausgebildet, dass als Sekundär-Wärmetransportfluid ein Wärmetransportfluid verwendet wird, dessen Wärmekapazität größer ist als die Wärmekapazität des Primär-Wärmetransportfluids.

Das entsprechend ausgebildete Verfahren weist den Vorteil auf, dass die mittels konzentrierter Sonnenstrahlung gewonnene Wärmeenergie über größere Distanzen mit geringeren Wärmeverlusten zu einer Erwärmungseinrichtung, mittels der das metallhaltige Produkt erwärmt werden soll, transportierbar ist.

Vorzugsweise ist das Verfahren derart ausgebildet, dass als Sekundär-Wärmetransportfluid ein Wärmetransportfluid verwendet wird, dessen spezifische Wärmekapazität größer ist als die spezifische Wärmekapazität des Primär-Wärmetransportfluids.

Vorzugsweise ist das Verfahren derart ausgebildet, dass als Sekundär-Wärmetransportfluid ein Wärmetransportfluid verwendet wird, dessen Dichte größer ist als die Dichte des Primär-Wärmetransportfluids.

Vorzugsweise ist das Verfahren derart ausgebildet, dass als Sekundär-Wärmetransportfluid ein Wärmetransportfluid verwendet wird, dessen Produkt aus spezifischer Wärmekapazität und Dichte größer ist als das Produkt der spezifischen Wärmekapazität und Dichte des Primär-Wärmetransportfluids.

Unter der Dichte der jeweiligen Wärmetransportfluide ist deren Masse pro Volumeneinheit zu verstehen.

Vorzugsweise weist das Verfahren einen Verfahrensschritt des Übertragens von Wärmeenergie des Primär-Wärmetransportfluids auf ein zweites Sekundär-Wärmetransportfluid in einer zweiten Wärmetauschereinrichtung auf, die parallel zur Wärmetauschereinrichtung eingerichtet ist, so dass parallel Wärmeenergie des Primär-Wärmetransportfluids auf das Sekundär-Wärmetransportfluid und das zweite Sekundär-Wärmetransportfluid übertragen wird. Ferner weist das Verfahren einen Verfahrensschritt des Übertragens von Wärmeenergie des zweiten Sekundär-Wärmetransportfluids auf ein zweites metallhaltiges Produkt in einer zweiten Erwärmungseinrichtung auf.

Das entsprechend ausgebildete Verfahren weist den Vorteil auf, dass parallel unterschiedliche metallhaltige Produkte auch auf unterschiedliche Temperaturen vor deren Verarbeitung erwärmt werden können. Somit ermöglicht das entsprechend ausgebildete Verfahren eine erhöhte Flexibilität.

Beispielsweise weist das zweite Sekundär-Wärmetransportfluid eine Salzschmelze auf oder ist eine Salzschmelze, wobei die Salzschmelze beispielsweise NaNO₃ und/oder KNO₃ aufweist. Weiter vorzugsweise weist das zweite Sekundär-Wärmetransportfluid eine Metallschmelze auf oder ist eine Metallschmelze. Beispielsweise weist die Metallschmelze Zinn und/oder Zink und/oder Aluminium und/oder Blei auf.

In jedem der Fluidkreisläufe, also im Primär-Fluidkreislauf und in jedem der Sekundär-Fluidkreisläufe kann eine Wärmespeichereinrichtung wie oben beschrieben angeordnet sein.

Vorzugsweise ist das Verfahren derart ausgebildet, dass als zweites Sekundär-Wärmetransportfluid ein Wärmetransportfluid verwendet wird, dessen Wärmekapazität größer ist als die Wärmekapazität des Primär-Wärmetransportfluids.

Vorzugsweise ist das Verfahren derart ausgebildet, dass als zweites Sekundär-Wärmetransportfluid ein Wärmetransportfluid verwendet wird, dessen spezifische Wärmekapazität größer ist als die spezifische Wärmekapazität des Primär-Wärmetransportfluids.

Vorzugsweise ist das Verfahren derart ausgebildet, dass als zweites Sekundär-Wärmetransportfluid ein Wärmetransportfluid verwendet wird, dessen Dichte größer ist als die Dichte des Primär-Wärmetransportfluids.

Vorzugsweise ist das Verfahren derart ausgebildet, dass als zweites Sekundär-Wärmetransportfluid ein Wärmetransportfluid verwendet wird, dessen Produkt aus spezifischer Wärmekapazität und Dichte größer ist als das Produkt der spezifischen Wärmekapazität und Dichte des Primär-Wärmetransportfluids.

Vorzugsweise weist das Verfahren einen Verfahrensschritt des Transportierens des Primär-Wärmetransportfluids zu der Wärmetauschereinrichtung über eine erste Wegstrecke auf, wobei in der Wärmetauschereinrichtung Wärmeenergie von dem Primär-Wärmetransportfluid auf das Sekundär-Wärmetransportfluid übertragen wird. Ferner weist das Verfahren einen Verfahrensschritt des Transportierens des Sekundär-Wärmetransportfluids zu der Erwärmungseinrichtung über eine zweite Wegstrecke auf, die größer als die erste Wegstrecke ist, wobei in der Erwärmungseinrichtung Wärmeenergie von dem Sekundär-Wärmetransportfluid auf das metallische Produkt übertragen wird.

Das entsprechend ausgebildete Verfahren ermöglicht einen effizienten Transport der mittels konzentrierter Sonnenstrahlung erzeugten Wärmeenergie mit geringen Wärmeenergieverlusten über eine große Distanz. Folglich ermöglicht das entsprechend ausgebildete Verfahren, dass eine Fluiderwärmungseinrichtung, die dazu ausgebildet ist, ein Primär-Wärmetransportfluid mittels konzentrierter Sonnenstrahlung zu erwärmen, einen größeren Abstand zu der Erwärmungseinrichtung, in der das metallhaltige Produkt mittels der durch konzentrierte Sonnenstrahlung gewonnenen Energie erwärmt wird, aufweisen kann.

Dies ist insbesondere vorteilhaft, wenn die konzentrierte Sonnenstrahlung einer Solarthermieanlage zum Erwärmen des Primär-Wärmetransportfluids verwendet wird. Ein Solarturmkraftwerk weist eine Fluiderwärmungseinrichtung auf, die auf einem Turmbauwerk angeordnet ist. Die Fluiderwärmungseinrichtung wird auch als Receiver und/oder als Absorberstation und/oder als Brennkammer bezeichnet. Unterhalb der Fluiderwärmungseinrichtung sind eine Vielzahl von Reflektoreinrichtungen angeordnet, die auch als Heliostaten bezeichnet werden, mittels denen die Sonnenstrahlung auf die Fluiderwärmungseinrichtung reflektiert wird. Die Reflektoreinrichtungen belegen eine große Fläche um das Turmbauwerk herum, so dass eine Erwärmungseinrichtung zum Erwärmen des metallhaltigen Produkts üblicherweise außerhalb einer Fläche, in der die Reflektoreinrichtungen angeordnet sind, platziert werden kann. Folglich ermöglicht das beschriebene Verfahren eine Vergrößerung des Abstandes Fluiderwärmungseinrichtung zu der Erwärmungseinrichtung zum Erwärmen des metallhaltigen Produkts.

Vorzugsweise ist die erste Wegstrecke kürzer als 1000 Meter. Weiter vorzugsweise ist die erste Wegstrecke kürzer als 800 Meter. Weiter vorzugsweise ist die erste Wegstrecke kürzer als 600 Meter. Weiter vorzugsweise ist die erste Wegstrecke kürzer als 400 Meter. Weiter vorzugsweise ist die erste Wegstrecke kürzer als 200 Meter.

Vorzugsweise beträgt die erste Wegstrecke zwischen 100 Meter und 1000 Meter. Weiter vorzugsweise beträgt die erste Wegstrecke zwischen 110 Meter und 900 Meter. Weiter vorzugsweise beträgt die erste Wegstrecke zwischen 120 Meter und 800 Meter. Weiter vorzugsweise beträgt die erste Wegstrecke zwischen 130 Meter und 700 Meter. Weiter vorzugsweise beträgt die erste Wegstrecke zwischen 140 Meter und 600 Meter. Weiter vorzugsweise beträgt die erste Wegstrecke zwischen 150 Meter und 500 Meter. Weiter vorzugsweise beträgt die erste Wegstrecke zwischen 160 Meter und 400 Meter. Weiter vorzugsweise beträgt die erste Wegstrecke zwischen 170 Meter und 300 Meter. Weiter vorzugsweise beträgt die erste Wegstrecke zwischen 180 Meter und 200 Meter.

Vorzugsweise weist das Verfahren einen Verfahrensschritt des Transportierens des Primär-Wärmetransportfluids zu der zweiten Wärmetauschereinrichtung über eine dritte Wegstrecke auf, wobei in der zweiten Wärmetauschereinrichtung Wärmeenergie von dem Primär-Wärmetransportfluid auf das zweite Sekundär-Wärmetransportfluid übertragen wird. Ferner weist das Verfahren einen Verfahrensschritt des Transportierens des zweiten Sekundär-Wärmetransportfluids zu der Erwärmungseinrichtung über eine vierte Wegstrecke auf, die größer als die dritte Wegstrecke ist, wobei in der Erwärmungseinrichtung Wärmeenergie von dem zweiten Sekundär-Wärmetransportfluid auf das zweite metallhaltige Produkt übertragen wird.

Das entsprechend ausgebildete Verfahren ermöglicht einen effizienten Transport der mittels konzentrierter Sonnenstrahlung erzeugten Wärmeenergie mit geringen Wärmeenergieverlusten über eine große Distanz. Folglich ermöglicht das entsprechend ausgebildete Verfahren, dass eine Fluiderwärmungseinrichtung, die dazu ausgebildet ist, ein Primär-Wärmetransportfluid mittels konzentrierter Sonnenstrahlung zu erwärmen, einen größeren Abstand zu der Erwärmungseinrichtung, in der das metallhaltige Produkt mittels der durch konzentrierte Sonnenstrahlung gewonnenen Energie erwärmt wird, aufweisen kann.

Dies ist insbesondere vorteilhaft, wenn die konzentrierte Sonnenstrahlung einer Solarthermieanlage zum Erwärmen des Primär-Wärmetransportfluids verwendet wird. Eine Solarthermieanlage weist eine Fluiderwärmungseinrichtung auf, die auf einem Turmbauwerk angeordnet ist. Die Fluiderwärmungseinrichtung wird auch als Receiver und/oder als Absorberstation und/oder als Brennkammer bezeichnet. Unterhalb der Fluiderwärmungseinrichtung sind eine Vielzahl von Reflektoreinrichtungen angeordnet, die auch als Heliostaten bezeichnet werden, mittels denen die Sonnenstrahlung auf die Fluiderwärmungseinrichtung reflektiert wird. Die Reflektoreinrichtungen belegen eine große Fläche um das Turmbauwerk herum, so dass eine Erwärmungseinrichtung zum Erwärmen des metallhaltigen Produkts üblicherweise außerhalb einer Fläche, in der die Reflektoreinrichtungen angeordnet sind, platziert werden kann. Folglich ermöglicht das beschriebene Verfahren eine Vergrößerung des Abstandes Fluiderwärmungseinrichtung zu der Erwärmungseinrichtung zum Erwärmen des metallhaltigen Produkts.

Vorzugsweise ist die dritte Wegstrecke kürzer als 1000 Meter. Weiter vorzugsweise ist die dritte Wegstrecke kürzer als 800 Meter. Weiter vorzugsweise ist die dritte Wegstrecke kürzer als 600 Meter. Weiter vorzugsweise ist die dritte Wegstrecke kürzer als 400 Meter. Weiter vorzugsweise ist die dritte Wegstrecke kürzer als 200 Meter.

Vorzugsweise beträgt die dritte Wegstrecke zwischen 100 Meter und 1000 Meter. Weiter vorzugsweise beträgt die dritte Wegstrecke zwischen 110 Meter und 900 Meter. Weiter vorzugsweise beträgt die dritte Wegstrecke zwischen 120 Meter und 800 Meter. Weiter vorzugsweise beträgt die dritte Wegstrecke zwischen 130 Meter und 700 Meter. Weiter vorzugsweise beträgt die dritte Wegstrecke zwischen 140 Meter und 600 Meter. Weiter vorzugsweise beträgt die dritte Wegstrecke zwischen 150 Meter und 500 Meter. Weiter vorzugsweise beträgt die dritte Wegstrecke zwischen 160 Meter und 400 Meter. Weiter vorzugsweise beträgt die dritte Wegstrecke zwischen 170 Meter und 300 Meter. Weiter vorzugsweise beträgt die dritte Wegstrecke zwischen 180 Meter und 200 Meter.

Vorzugsweise weist das Verfahren einen Verfahrensschritt des Übertragens von Wärmeenergie des Sekundär-Wärmetransportfluids auf ein Tertiär-Wärmetransportfluid in einer dritten Wärmetauschereinrichtung und einen Verfahrensschritt des Übertragens von Wärmeenergie des Tertiär-Wärmetransportfluids auf das metallhaltige Produkt in einer dritten Erwärmungseinrichtung.

Beispielsweise wird als Tertiär-Wärmetransportfluid ein Gas verwendet, ausgewählt aus der Gruppe bestehend aus Kohlendioxid, Wasserdampf, Methan, Ammoniak, Kohlenmonoxid, Schwefeldioxid, Schwefeltrioxid, Salzsäure, Stickstoffmonooxid, Stickstoffdioxid, Stickstoff, Luft und Mischungen davon.

Beispielsweise weist das Tertiär-Wärmetransportfluid eine Salzschmelze auf oder ist eine Salzschmelze, beispielsweise NaNO₃ und/oder KNO₃ aufweisend.

Weiter vorzugsweise weist das Tertiär-Wärmetransportfluid eine Metallschmelze auf oder ist eine Metallschmelze. Beispielsweise weist die Metallschmelze Zinn und/oder Zink und/oder Aluminium und/oder Blei auf.

Vorzugsweise ist das Verfahren derart ausgebildet, dass als Tertiär-Wärmetransportfluid ein Wärmetransportfluid verwendet wird, dessen Wärmekapazität sich von der Wärmekapazität des Sekundär-Wärmetransportfluids unterscheidet.

Weiter vorzugsweise ist das Verfahren derart ausgebildet, dass als Tertiär-Wärmetransportfluid ein Wärmetransportfluid verwendet wird, dessen spezifische Wärmekapazität sich von der spezifischen Wärmekapazität des Sekundär-Wärmetransportfluids unterscheidet.

Weiter vorzugsweise ist das Verfahren derart ausgebildet, dass als Tertiär-Wärmetransportfluid ein Wärmetransportfluid verwendet wird, dessen Dichte sich von der Wärmekapazität des Sekundär-Wärmetransportfluids unterscheidet.

Weiter vorzugsweise ist das Verfahren derart ausgebildet, dass als Tertiär-Wärmetransportfluid ein Wärmetransportfluid verwendet wird, dessen Wärmekapazität und/oder dessen Dichte kleiner als die Wärmekapazität und/oder die Dichte des Sekundär-Wärmetransportfluids ist.

Weiter vorzugsweise ist das Verfahren derart ausgebildet, dass als Tertiär-Wärmetransportfluid ein Wärmetransportfluid verwendet wird, dessen Wärmekapazität und/oder dessen Dichte größer als die Wärmekapazität des Sekundär-Wärmetransportfluids ist.

Der vorliegenden Erfindung liegt ferner die Aufgabe zugrunde, ein Verarbeitungssystem zum Erwärmen und zum Weiterverarbeiten von zumindest einem metallhaltigen Produkt bereitzustellen, mittels dem im Vergleich zu aus dem Stand der Technik bekannten Verarbeitungssystemen eine erhebliche Reduktion der Emission von Treibhausgasen und insbesondere eine Reduktion der Emission von Kohlendioxid realisiert ist.

Diese der vorliegenden Erfindung zugrundeliegende Aufgabe wird durch ein Verarbeitungssystem mit den in Anspruch 10 angegebenen Merkmalen gelöst. Ausgestaltungen des Verarbeitungssystems sind in den von Anspruch 10 abhängigen Ansprüchen beschrieben.

Im Genaueren wird die der vorliegenden Erfindung zugrundeliegende Aufgabe durch ein Verarbeitungssystem zum Erwärmen und zum Weiterverarbeiten von zumindest einem metallhaltigen Produkt gelöst, wobei das Verarbeitungssystem eine Fluiderwärmungseinrichtung aufweist, die dazu ausgebildet ist, ein Primär-Wärmetransportfluid mittels konzentrierter Sonnenstrahlung zu erwärmen, und eine Erwärmungseinrichtung aufweist, die dazu ausgebildet ist, Wärme des Primär-Wärmetransportfluids zumindest mittelbar auf das metallhaltige Produkt zu übertragen, und eine Verarbeitungseinrichtung zum Verarbeiten des erwärmten metallhaltigen Produkts aufweist, wobei die Verarbeitungseinrichtung als Umformeinrichtung und/oder Einrichtung zum Tempern und/oder Glühen ausgebildet ist.

Das erfindungsgemäße Verarbeitungssystem weist den Vorteil auf, dass zum Erwärmen und Weiterverarbeiten eines metallhaltigen Produkts erheblich weniger und gegebenenfalls keine Energie benötigt wird, die aus fossilen Brennstoffen oder mittels Kernkraft gewonnen wird. Folglich wird beim Erwärmen und dem anschließenden Weiterverarbeiten eines metallhaltigen Produkts erheblich weniger und gegebenenfalls kein Kohlendioxid erzeugt.

Aufgrund der Nutzung von konzentrierter Sonnenstrahlung und somit aufgrund der Nutzung von Solarthermie weist das erfindungsgemäße Verarbeitungssystem einen hohen Wirkungsgrad hinsichtlich des zur Erwärmung genutzten Energieanteils der Sonnenstrahlung auf. Aufgrund der Verwendung von konzentrierter Sonnenstrahlung können im Bereich von oder mehr als 30% der Strahlungsenergie der konzentrierten Sonnenstrahlung zur Erwärmung des eines metallischen Produkts genutzt werden. Dieser Wirkungsgrad ist erheblich höher als bei einer Nutzung von Photovoltaik. Denn bei einer Nutzung von Photovoltaik wird Sonnenlicht zur Erzeugung von elektrischer Energie genutzt, wobei im industriellen Maßstab nutzbare Photovoltaikmodule einen Wirkungsgrad von circa 25% aufweisen. Folglich wird lediglich 25% der Energie der Sonnenstrahlung in elektrische Energie umgewandelt. Diese elektrische Energie muss noch in Wärmeenergie umgewandelt werden, was den Gesamtwirkungsgrad bis zur Erwärmung des metallhaltigen Produkts nochmals reduziert.

Die Fluiderwärmungseinrichtung ist beispielsweise Teil einer Solarthermieanlage und auf einem Turm angeordnet, der in einem Feld aus Heliostaten angeordnet ist, die Sonnenstrahlung in/auf die Fluiderwärmungseinrichtung reflektieren. Es ist auch möglich, das die Fluiderwärmungseinrichtung im Brennpunkt einer reflektierenden Parabolrinne oder im Brennpunkt einer Fresnelspiegelanordnung oder im Brennpunkt einer Fresnellinsenanordnung angeordnet ist, so dass von der Parabolrinne oder von der Fresnelspiegelanordnung reflektierte Sonnenstrahlung oder von der Fresnellinsenanordnung gesammelte Sonnenstrahlung von dem Primär-Wärmetransportfluid absorbiert werden kann.

Die Erwärmungseinrichtung ist beispielsweise als Ofen ausgebildet. Unter einem Ofen ist eine Einrichtung zu verstehen, die einen vorgegebenen Raumbereich auf eine größere Temperatur als eine den vorgegebenen Raumbereich benachbarten Raumbereich erwärmen kann. Beispielsweise ist der Ofen als Schmelzofen oder als Tunnelofen oder als Wiedererwärmungsofen oder als Glühofen oder als Haubenofen oder als Wärmebehandlungslinie oder als Schwebeschmelzofen ausgebildet. Der Ofen wird beispielsweise von dem Wärmetransportfluid durchströmt. Erfindungsgemäß bestehen hinsichtlich der Ausgestaltung des Ofens keinerlei Einschränkungen.

Das metallhaltige Produkt kann jedes Produkt sein, das zumindest ein Metall **(z.B.** Eisen, Kupfer, Aluminium, Nickel, Zinn, oder eine zumindest ein dieser Metalle aufweisende Legierung) aufweist. Unter einem metallhaltigen Produkt ist beispielsweise ein Metall aufweisendes Halbzeug **(z.B.** eine Bramme oder ein Knüppel, usw.) und/oder Schrott und/oder Eisenschwamm (das auch als DRI (englische Abkürzung für Direct Reduced Iron) bezeichnet wird) und/oder poröser Eisenschwamm (das auch als HBI (englische Abkürzung für Hot Briquetted Iron) bezeichnet wird) oder dergleichen zu verstehen. Auch bezüglich des metallhaltigen Produkts bestehen erfindungsseitig keinerlei Einschränkungen.

Die Verarbeitungseinrichtung ist als Umformeinrichtung (z.B. Walzeinrichtung) und/oder Einrichtung zum Tempern und/oder zum Glühen ausgebildet.

Das Verarbeitungssystem ist vorzugsweise dazu ausgebildet, das Primär-Wärmetransportfluid mittels der konzentrierten Sonnenstrahlung auf eine Temperatur im Bereich zwischen 500°C bis 1700°C, vorzugsweise im Bereich zwischen 700°C bis 1700°C, weiter vorzugsweise im Bereich zwischen 800°C bis 1650°C, weiter vorzugsweise im Bereich zwischen 900°C bis 1650°C, weiter vorzugsweise im Bereich zwischen 900°C bis 1600°C, weiter vorzugsweise im Bereich zwischen 1100°C bis 1650°C, weiter vorzugsweise im Bereich zwischen 1200°C bis 1600°C, weiter vorzugsweise im Bereich zwischen 1300°C bis 1600°C, weiter vorzugsweise im Bereich zwischen 1400°C bis 1550°C, weiter vorzugsweise im Bereich zwischen 1400°C bis 1500°C zu erwärmen.

Beispielsweise ist das Verarbeitungssystem derart ausgebildet, dass das Primär-Wärmetransportfluid mittels konzentrierter Sonnenstrahlung auf eine Temperatur im Bereich zwischen 1500°C bis 1600°C, weiter vorzugsweise auf 1550°C erwärmt wird. Dieser Temperaturbereich ist besonders geeignet zum Schmelzen von Schrott und/oder von direkt reduziertem Eisen.

Beispielsweise ist das Verarbeitungssystem derart ausgebildet, dass das Primär-Wärmetransportfluid mittels konzentrierter Sonnenstrahlung auf eine Temperatur im Bereich zwischen 600°C bis 850°C erwärmt wird. Dieser Temperaturbereich ist besonders geeignet zum Vorheizen von Schrott und/oder von direkt reduziertem Eisen.

Beispielsweise ist das Verarbeitungssystem derart ausgebildet, dass das Primär-Wärmetransportfluid mittels konzentrierter Sonnenstrahlung auf eine Temperatur im Bereich zwischen 1150°C bis 1250°C, weiter vorzugsweise auf 1200°C erwärmt wird. Dieser Temperaturbereich ist besonders geeignet zum Wiedererhitzen von Brammen und/oder Knüpplen oder anderen eisenhaltigen Halbzeugen vor der Weiterverarbeitung.

Beispielsweise ist das Verarbeitungssystem derart ausgebildet, dass das Primär-Wärmetransportfluid mittels konzentrierter Sonnenstrahlung auf eine Temperatur im Bereich zwischen 600°C bis 700°C, weiter vorzugsweise auf 650°C erwärmt wird. Dieser Temperaturbereich ist besonders geeignet zum Tempern, Glühen von Brammen und/oder Knüpplen oder anderen eisenhaltigen Halbzeugen.

Beispielsweise ist das Verarbeitungssystem derart ausgebildet, dass das Primär-Wärmetransportfluid mittels konzentrierter Sonnenstrahlung auf eine Temperatur im Bereich zwischen 700°C bis 800°C, weiter vorzugsweise auf 750°C erwärmt wird. Dieser Temperaturbereich ist besonders geeignet zum Durchlaufglühen von Brammen und/oder Knüpplen oder anderen eisenhaltigen Halbzeugen.

Vorzugsweise ist das Verarbeitungssystem derart ausgebildet, dass als Primär-Wärmetransportfluid zumindest ein Gas verwendet wird, ausgewählt aus der Gruppe bestehend aus Kohlendioxid, Wasserdampf, Methan, Ammoniak, Kohlenmonoxid, Schwefeldioxid, Schwefeltrioxid, Salzsäure, Stickstoffmonooxid, Stickstoffdioxid, Stickstoff, Luft und Mischungen davon.

Es ist auch möglich, dass das Primär-Wärmetransportfluid eine Salzschmelze aufweist oder eine Salzschmelze ist, wobei die Salzschmelze beispielsweise NaNO₃ und/oder KNO₃ aufweist. Weiter vorzugsweise weist das Primär-Wärmetransportfluid eine Metallschmelze auf oder ist eine Metallschmelze. Beispielsweise weist die Metallschmelze Zinn und/oder Zink und/oder Aluminium und/oder Blei auf.

Vorzugsweise ist das Verarbeitungssystem derart ausgebildet, dass das Erwärmen des Primär-Wärmetransportfluids unmittelbar in einer von konzentrierter Sonnenstrahlung beschienenen Fluiderwärmungseinrichtung einer Solarthermieanlage erwärmt wird.

Beispielsweise strömt das Primär-Wärmetransportfluid durch die Fluiderwärmungseinrichtung, in die die von Reflektoren reflektierte Sonnenstrahlung konzentriert wird. Dabei wechselwirkt das Primär-Wärmetransportfluid unmittelbar mit der konzentrierten Sonnenstrahlung und wird von dieser erwärmt.

Vorzugsweise ist das Verarbeitungssystem derart ausgebildet, dass ein Primär-Wärmetransportfluid verwendet wird, welches keine Festkörperbestandteile, insbesondere keine Keramikbestandteile aufweist.

Als Primär-Wärmetransportfluid kann beispielsweise ein Gas verwendet werden. Ein Primär-Wärmetransportfluid ohne Festkörperbestandteile weist den Vorteil auf, dass eine Transportvorrichtung (z.B. Rohre bzw. ein Rohrsystem) zum Transport des Wärmetransportfluids einem geringeren Verschleiß ausgesetzt ist. Ferner können sich keine Festkörperbestandteile in Bereichen der Transportvorrichtung ablagern, in denen kleinere Transportgeschwindigkeiten des Wärmetransportfluids vorliegen.

Es ist insbesondere besonders vorteilhaft, wenn das Primär-Wärmetransportfluid keine Keramikbestandteile, insbesondere kein Keramikpulver transportiert. Denn Keramikbestandteile führen zu einem besonders hohen Verschleiß der Transportvorrichtung.

Die Erwärmungseinrichtung und Verarbeitungseinrichtung können als integral ausgebildete Einrichtung realisiert sein, beispielsweise in einer Industrieanlage.

Die Erwärmungseinrichtung kann derart ausgebildet sein, dass das Primär-Wärmetransportfluid durch die Erwärmungseinrichtung transportiert wird, wobei die Erwärmungseinrichtung die so erhaltene Wärmeenergie auf das metallhaltige Produkt (beispielsweise mittels Wärmestrahlung) überträgt.

Ferner kann die Erwärmungseinrichtung derart ausgebildet sein, dass das Primär-Wärmetransportfluid direkt mit dem metallhaltigen Produkt in Wechselwirkung und/oder in Kontakt bringbar ist, um die Wärmeenergie auf das metallhaltige Produkt zu übertragen.

Vorzugsweise ist das Verarbeitungssystem derart ausgebildet, dass dieses eine Wärmespeichereinrichtung aufweist, wobei das Verarbeitungssystem dazu ausgebildet ist, Wärmeenergie des Primär-Wärmetransportfluids zumindest mittelbar auf die Wärmespeichereinrichtung zu übertragen.

Das entsprechend ausgebildete Verarbeitungssystem weist den Vorteil auf, dass die Wärmeenergie, die mittels der konzentrierten Sonnenstrahlung gewonnen wird, auch in Zeitperioden verwendet werden kann, in denen keine oder eine vergleichsweise geringere Sonnenstrahlung zur Verfügung steht. Somit ist eine gleichmäßigere Erwärmung des metallhaltigen Produkts ermöglicht.

Beispielsweise ist das Verarbeitungssystem derart ausgebildet, dass zum Übertragen von Wärmeenergie der Wärmespeichereinrichtung auf das metallhaltige Produkt das Primär-Wärmetransportfluid verwendet wird.

Als Wärmespeichereinrichtung kann beispielsweise ein Reservoir des Primär-Wärmetransportfluids dienen. Ferner kann beispielsweise ein sich von dem Primär-Wärmetransportfluid unterscheidendes Wärmetransportfluid (beispielsweise eine Salzschmelze, beispielsweise NaNO₃ und/oder KNO₃ aufweisend) als Wärmespeichereinrichtung verwendet werden. Ferner kann beispielsweise ein Festkörper als Wärmespeichereinrichtung verwendet werden. Hinsichtlich der Ausgestaltung des Festkörpers bestehen keine Einschränkungen. Der Festkörper kann beispielsweise Steine und/oder Beton und/oder Metallkörper oder dergleichen aufweisen.

Ferner ist es auch im Sinne des erfindungsgemäßen Verarbeitungssystems, dass Wärmeenergie des Primär-Wärmetransportfluids auf ein Sekundär-Wärmetransportfluid und/oder auf ein Tertiär-Wärmetransportfluid übertragen wird, wobei anschließend Wärmeenergie des Sekundär-Wärmetransportfluids und/oder des Tertiär-Wärmetransportfluids auf eine Wärmespeichereinrichtung übertragen wird. Somit wird die Wärmeenergie des Primär-Wärmetransportfluids mittelbar auf die Wärmespeichereinrichtung übertragen.

Als Wärmespeichereinrichtung kann auch ein Winderhitzer eines Hochofens ausgebildet sein. Ein entsprechend ausgebildetes Verfahren ermöglicht eine erhebliche Reduktion von Kohlendioxidemissionen im Hochofenprozess.

Vorzugsweise ist das Verarbeitungssystem derart ausgebildet, dass dieses eine Wärmetauschereinrichtung aufweist, mittels der Wärmeenergie des Primär-Wärmetransportfluids auf ein Sekundär-Wärmetransportfluid übertragbar ist, und wobei die Erwärmungseinrichtung ist dazu ausgebildet, Wärme des Sekundär-Wärmetransportfluids zumindest mittelbar auf das metallhaltige Produkt zu übertragen.

Das entsprechend ausgebildete Verarbeitungssystem weist den Vorteil auf, dass die Wärmeenergie des Primär-Wärmetransportfluids für metallhaltige Produkte, die für die weitere Verarbeitung auf eine bedeutend niedrigere Temperatur als eine Temperatur des Primär-Wärmetransportfluids erwärmt werden sollen, verbessert nutzbar ist. Denn die Temperatur des Sekundär-Wärmetransportfluids ist niedriger als die Temperatur des Primär-Wärmetransportfluids.

Wie bereits oben beschrieben kann die Wärmespeichereinrichtung mittels des Sekundär-Wärmetransportfluids erwärmt werden. Ferner ist es auch möglich, dass eine erste Wärmespeichereinrichtung mittels des Primär-Wärmetransportfluids und eine zweite Wärmespeichereinrichtung mittels des Sekundär-Wärmetransportfluids erwärmt wird. Folglich wäre die erste Wärmespeichereinrichtung in einem Primär-Fluidkreislauf und die zweite Wärmespeichereinrichtung in einem Sekundär-Fluidkreislauf angeordnet.

Beispielsweise weist das Sekundär-Wärmetransportfluid eine Salzschmelze auf oder ist eine Salzschmelze, wobei die Salzschmelze beispielsweise NaNO₃ und/oder KNO₃ aufweist. Weiter vorzugsweise weist das Sekundär-Wärmetransportfluid eine Metallschmelze auf oder ist eine Metallschmelze. Beispielsweise weist die Metallschmelze Zinn und/oder Zink und/oder Aluminium und/oder Blei auf.

Die Erwärmungseinrichtung kann derart ausgebildet sein, dass das Sekundär-Wärmetransportfluid durch die Erwärmungseinrichtung transportiert wird, wobei die Erwärmungseinrichtung die so erhaltene Wärmeenergie auf das metallhaltige Produkt (beispielsweise mittels Wärmestrahlung) überträgt.

Ferner kann die Erwärmungseinrichtung derart ausgebildet sein, dass das Sekundär-Wärmetransportfluid direkt mit dem metallhaltigen Produkt in Wechselwirkung und/oder in Kontakt bringbar ist, um die Wärmeenergie auf das metallhaltige Produkt zu übertragen.

Vorzugsweise weist das Verarbeitungssystem eine zweite Wärmetauschereinrichtung auf, die parallel zur Wärmetauschereinrichtung eingerichtet ist, so dass parallel Wärmeenergie des Primär-Wärmetransportfluids mittels der Wärmetauschereinrichtung auf das Sekundär-Wärmetransportfluid und mittels der zweiten Wärmetauchereinrichtung auf das zweite Sekundär-Wärmetransportfluid übertragbar ist. Ferner weist das das Verarbeitungssystem eine zweite Erwärmungseinrichtung auf, die dazu ausgebildet ist, Wärme des zweiten Sekundär-Wärmetransportfluids zumindest mittelbar auf ein zweites metallhaltiges Produkt zu übertragen.

Das entsprechend ausgebildete Verarbeitungssystem weist den Vorteil auf, dass parallel unterschiedliche metallhaltige Produkte auch auf unterschiedliche Temperaturen vor deren Verarbeitung erwärmt werden können. Somit ermöglicht das entsprechend ausgebildete Verarbeitungssystem eine erhöhte Flexibilität.

Beispielsweise weist das zweite Sekundär-Wärmetransportfluid eine Salzschmelze auf oder ist eine Salzschmelze, wobei die Salzschmelze beispielsweise NaNO₃ und/oder KNO₃ aufweist. Weiter vorzugsweise weist das zweite Sekundär-Wärmetransportfluid eine Metallschmelze auf oder ist eine Metallschmelze. Beispielsweise weist die Metallschmelze Zinn und/oder Zink und/oder Aluminium und/oder Blei auf.

In jedem der Fluidkreisläufe, also im Primär-Fluidkreislauf und in jedem der Sekundär-Fluidkreisläufe kann eine Wärmespeichereinrichtung wie oben beschrieben angeordnet sein.

Vorzugsweise ist das Verarbeitungssystem derart ausgebildet, dass als zweites Sekundär-Wärmetransportfluid ein Wärmetransportfluid verwendet wird, dessen Wärmekapazität größer ist als die Wärmekapazität des Primär-Wärmetransportfluids.

Vorzugsweise ist das Verarbeitungssystem derart ausgebildet, dass als zweites Sekundär-Wärmetransportfluid ein Wärmetransportfluid verwendet wird, dessen Dichte größer ist als die Dichte des Primär-Wärmetransportfluids.

Vorzugsweise ist das Verarbeitungssystem derart ausgebildet, dass als zweites Sekundär-Wärmetransportfluid ein Wärmetransportfluid verwendet wird, dessen Produkt aus spezifischer Wärmekapazität und Dichte größer ist als das Produkt der spezifischen Wärmekapazität und Dichte des Primär-Wärmetransportfluids.

Die zweite Erwärmungseinrichtung kann derart ausgebildet sein, dass das zweite Sekundär-Wärmetransportfluid durch die zweite Erwärmungseinrichtung transportiert wird, wobei die zweite Erwärmungseinrichtung die so erhaltene Wärmeenergie auf das zweite metallhaltige Produkt (beispielsweise mittels Wärmestrahlung) überträgt.

Ferner kann die zweite Erwärmungseinrichtung derart ausgebildet sein, dass das zweite Sekundär-Wärmetransportfluid direkt mit dem zweiten metallhaltigen Produkt in Wechselwirkung und/oder in Kontakt bringbar ist, um die Wärmeenergie auf das zweite metallhaltige Produkt zu übertragen.

Vorzugsweise ist das Verarbeitungssystem derart ausgebildet, dass die Fluiderwärmungseinrichtung mit der Wärmetauschereinrichtung mittels des in einem Primär-Fluidkreislauf zirkulierendem Primär-Wärmetransportfluid wärmegekoppelt ist, wobei die Wärmetauschereinrichtung mit der Erwärmungseinrichtung mittels des in einem Sekundär-Fluidkreislauf zirkulierendem Sekundär-Wärmetransportfluid wärmegekoppelt ist, wobei eine Primär-Fluidzulaufleitung des Primär-Fluidkreislaufs, über die das Primär-Wärmetransportfluid von der Fluiderwärmungseinrichtung in Richtung der Wärmetauschereinrichtung transportiert wird, eine erste Länge aufweist, und wobei eine Sekundär-Fluidzulaufleitung des Sekundär-Fluidkreislaufs, über die das Sekundär-Wärmetransportfluid von der Wärmetauschereinrichtung in Richtung der Erwärmungseinrichtung transportiert wird, eine zweite Länge aufweist, die größer als die erste Länge ist.

Das entsprechend ausgebildete Verarbeitungssystem ermöglicht einen effizienten Transport der mittels konzentrierter Sonnenstrahlung erzeugten Wärmeenergie mit geringen Wärmeenergieverlusten über eine große Distanz. Folglich ermöglicht das entsprechend ausgebildete Verarbeitungssystem, dass eine Fluiderwärmungseinrichtung, die dazu ausgebildet ist, ein Primär-Wärmetransportfluid mittels konzentrierter Sonnenstrahlung zu erwärmen, einen größeren Abstand zu der Erwärmungseinrichtung, in der das metallhaltige Produkt mittels der durch konzentrierte Sonnenstrahlung gewonnenen Energie erwärmt wird, aufweisen kann.

Dies ist insbesondere vorteilhaft, wenn die konzentrierte Sonnenstrahlung eines Solarturmkraftwerks zum Erwärmen des Primär-Wärmetransportfluids verwendet wird. Ein Solarturmkraftwerk weist eine Fluiderwärmungseinrichtung auf, die auf einem Turmbauwerk angeordnet ist. Die Fluiderwärmungseinrichtung wird auch als Receiver und/oder als Absorberstation und/oder als Brennkammer bezeichnet. Unterhalb der Fluiderwärmungseinrichtung sind eine Vielzahl von Reflektoreinrichtungen angeordnet, die auch als Heliostaten bezeichnet werden, mittels denen die Sonnenstrahlung auf die Fluiderwärmungseinrichtung reflektiert wird. Die Reflektoreinrichtungen belegen eine große Fläche um das Turmbauwerk herum, so dass eine Erwärmungseinrichtung zum Erwärmen des metallhaltigen Produkts üblicherweise außerhalb einer Fläche, in der die Reflektoreinrichtungen angeordnet sind, platziert werden kann. Folglich ermöglicht das beschriebene Verarbeitungssystem eine Vergrößerung des Abstandes Fluiderwärmungseinrichtung zu der Erwärmungseinrichtung zum Erwärmen des metallhaltigen Produkts.

Vorzugsweise ist die erste Länge kürzer als 1000 Meter. Weiter vorzugsweise ist die erste Länge kürzer als 800 Meter. Weiter vorzugsweise ist die erste Länge kürzer als 600 Meter. Weiter vorzugsweise ist die erste Länge kürzer als 400 Meter. Weiter vorzugsweise ist die erste Länge kürzer als 200 Meter.

Vorzugsweise beträgt die erste Länge zwischen 100 Meter und 1000 Meter. Weiter vorzugsweise beträgt die erste Länge zwischen 110 Meter und 900 Meter. Weiter vorzugsweise beträgt die erste Länge zwischen 120 Meter und 800 Meter. Weiter vorzugsweise beträgt die erste Länge zwischen 130 Meter und 700 Meter. Weiter vorzugsweise beträgt die erste Länge zwischen 140 Meter und 600 Meter. Weiter vorzugsweise beträgt die erste Länge zwischen 150 Meter und 500 Meter. Weiter vorzugsweise beträgt die erste Länge zwischen 160 Meter und 400 Meter. Weiter vorzugsweise beträgt die erste Länge zwischen 170 Meter und 300 Meter. Weiter vorzugsweise beträgt die erste Länge zwischen 180 Meter und 200 Meter.

Vorzugsweise ist das Verarbeitungssystem derart ausgebildet, dass die Fluiderwärmungseinrichtung mit der zweiten Wärmetauschereinrichtung mittels des in einem Primär-Fluidkreislauf zirkulierendem Primär-Wärmetransportfluid wärmegekoppelt ist, wobei die zweite Wärmetauschereinrichtung mit einer zweiten Erwärmungseinrichtung mittels des in einem zweiten Sekundär-Fluidkreislauf zirkulierendem zweiten Sekundär-Wärmetransportfluid wärmegekoppelt ist, wobei eine Primär-Fluidzulaufleitung des Primär-Fluidkreislaufs, über die das Primär-Wärmetransportfluid von der Fluiderwärmungseinrichtung in Richtung der zweiten Wärmetauschereinrichtung transportiert wird, eine dritte Länge aufweist, und wobei eine zweite Sekundär-Fluidzulaufleitung des zweiten Sekundär-Fluidkreislaufs, über die das zweite Sekundär-Wärmetransportfluid von der zweiten Wärmetauschereinrichtung in Richtung der zweiten Erwärmungseinrichtung transportiert wird, eine vierte Länge aufweist, die größer als die dritte Länge ist.

Das entsprechend ausgebildete Verarbeitungssystem weist den Vorteil auf, dass parallel unterschiedliche metallhaltige Produkte auch auf unterschiedliche Temperaturen vor deren Verarbeitung erwärmt werden können. Somit ermöglicht das entsprechend ausgebildete Verarbeitungssystem eine erhöhte Flexibilität.

Beispielsweise weist das zweite Sekundär-Wärmetransportfluid eine Salzschmelze auf oder ist eine Salzschmelze, wobei die Salzschmelze beispielsweise NaNO₃ und/oder KNO₃ aufweist. Weiter vorzugsweise weist das zweite Sekundär-Wärmetransportfluid eine Metallschmelze auf oder ist eine Metallschmelze. Beispielsweise weist die Metallschmelze Zinn und/oder Zink und/oder Aluminium und/oder Blei auf.

In jedem der Fluidkreisläufe, also im Primär-Fluidkreislauf und in jedem der Sekundär-Fluidkreisläufe kann eine Wärmespeichereinrichtung wie oben beschrieben angeordnet sein.

Vorzugsweise ist das Verarbeitungssystem derart ausgebildet, dass als zweites Sekundär-Wärmetransportfluid ein Wärmetransportfluid verwendet wird, dessen Wärmekapazität größer ist als die Wärmekapazität des Primär-Wärmetransportfluids.

Vorzugsweise ist das Verarbeitungssystem derart ausgebildet, dass als zweites Sekundär-Wärmetransportfluid ein Wärmetransportfluid verwendet wird, dessen Dichte größer ist als die Dichte des Primär-Wärmetransportfluids.

Vorzugsweise ist das Verarbeitungssystem derart ausgebildet, dass als zweites Sekundär-Wärmetransportfluid ein Wärmetransportfluid verwendet wird, dessen Produkt aus spezifischer Wärmekapazität und Dichte größer ist als das Produkt der spezifischen Wärmekapazität und Dichte des Primär-Wärmetransportfluids.

Vorzugsweise ist die dritte Länge kürzer als 1000 Meter. Weiter vorzugsweise ist die dritte Länge kürzer als 800 Meter. Weiter vorzugsweise ist die dritte Länge kürzer als 600 Meter. Weiter vorzugsweise ist die dritte Länge kürzer als 400 Meter. Weiter vorzugsweise ist die dritte Länge kürzer als 200 Meter.

Vorzugsweise beträgt die dritte Länge zwischen 100 Meter und 1000 Meter. Weiter vorzugsweise beträgt die dritte Länge zwischen 110 Meter und 900 Meter. Weiter vorzugsweise beträgt die dritte Länge zwischen 120 Meter und 800 Meter. Weiter vorzugsweise beträgt die dritte Länge zwischen 130 Meter und 700 Meter. Weiter vorzugsweise beträgt die dritte Länge zwischen 140 Meter und 600 Meter. Weiter vorzugsweise beträgt die dritte Länge zwischen 150 Meter und 500 Meter. Weiter vorzugsweise beträgt die dritte Länge zwischen 160 Meter und 400 Meter. Weiter vorzugsweise beträgt die dritte Länge zwischen 170 Meter und 300 Meter. Weiter vorzugsweise beträgt die dritte Länge zwischen 180 Meter und 200 Meter.

Vorzugsweise weist das Verarbeitungssystem eine dritte Wärmetauschereinrichtung auf, mittels der Wärmeenergie des Sekundär-Wärmetransportfluids auf ein Tertiär-Wärmetransportfluid übertragbar ist, wobei die Erwärmungseinrichtung dazu ausgebildet ist, Wärme des Tertiär-Wärmetransportfluids zumindest mittelbar auf das metallhaltige Produkt zu übertragen.

Beispielsweise wird als Tertiär-Wärmetransportfluid ein Gas verwendet, ausgewählt aus der Gruppe bestehend aus Kohlendioxid, Wasserdampf, Methan, Ammoniak, Kohlenmonoxid, Schwefeldioxid, Schwefeltrioxid, Salzsäure, Stickstoffmonooxid, Stickstoffdioxid, Stickstoff, Luft und Mischungen davon.

Beispielsweise weist das Tertiär-Wärmetransportfluid eine Salzschmelze auf oder ist eine Salzschmelze, beispielsweise NaNO₃ und/oder KNO₃ aufweisend.

Weiter vorzugsweise weist das Tertiär-Wärmetransportfluid eine Metallschmelze auf oder ist eine Metallschmelze. Beispielsweise weist die Metallschmelze Zinn und/oder Zink und/oder Aluminium und/oder Blei auf.

Vorzugsweise ist das Verarbeitungssystem derart ausgebildet, dass als Tertiär-Wärmetransportfluid ein Wärmetransportfluid verwendet wird, dessen Wärmekapazität sich von der Wärmekapazität des Sekundär-Wärmetransportfluids unterscheidet.

Weiter vorzugsweise ist das Verarbeitungssystem derart ausgebildet, dass als Tertiär-Wärmetransportfluid ein Wärmetransportfluid verwendet wird, dessen Dichte sich von der Wärmekapazität des Sekundär-Wärmetransportfluids unterscheidet.

Weiter vorzugsweise ist das Verarbeitungssystem derart ausgebildet, dass als Tertiär-Wärmetransportfluid ein Wärmetransportfluid verwendet wird, dessen Wärmekapazität und/oder dessen Dichte kleiner als die Wärmekapazität des Sekundär-Wärmetransportfluids ist.

Weiter vorzugsweise ist das Verarbeitungssystem derart ausgebildet, dass als Tertiär-Wärmetransportfluid ein Wärmetransportfluid verwendet wird, dessen Wärmekapazität und/oder dessen Dichte größer als die Wärmekapazität des Sekundär-Wärmetransportfluids ist.

Weitere Vorteile, Einzelheiten und Merkmale der Erfindung ergeben sich nachfolgend aus den erläuterten Ausführungsbeispielen. Dabei zeigen im Einzelnen:
- Figur 1:: zeigt ein Verfahrensablaufdiagramm eines erfindungsgemäßen Verfahrens zum Erwärmen und Weiterverarbeiten eines metallhaltigen Produkts unter Verwendung von konzentrierter Sonnenstrahlung;
- Figur 2:: zeigt ein Verfahrensablaufdiagramm einer weiteren Ausführungsform des erfindungsgemäßen Verfahrens zum Erwärmen und Weiterverarbeiten eines metallhaltigen Produkts unter Verwendung von konzentrierter Sonnenstrahlung;
- Figur 3:: zeigt ein Verfahrensablaufdiagramm einer nochmals weiteren Ausführungsform des erfindungsgemäßen Verfahrens zum Erwärmen und Weiterverarbeiten eines metallhaltigen Produkts unter Verwendung von konzentrierter Sonnenstrahlung;
- Figur 4:: zeigt ein Verfahrensablaufdiagramm einer nochmals weiteren Ausführungsform des erfindungsgemäßen Verfahrens zum Erwärmen und Weiterverarbeiten eines metallhaltigen Produkts unter Verwendung von konzentrierter Sonnenstrahlung;
- Figur 5:: zeigt ein Verfahrensablaufdiagramm einer nochmals weiteren Ausführungsform des erfindungsgemäßen Verfahrens zum Erwärmen und Weiterverarbeiten eines metallhaltigen Produkts unter Verwendung von konzentrierter Sonnenstrahlung;
- Figur 6:: zeigt einen schematischen Aufbau eines Verarbeitungssystems zum Erwärmen und zum Weiterverarbeiten von zumindest einem metallhaltigen Produkt unter Verwendung von konzentrierter Sonnenstrahlung;
- Figur 7:: zeigt einen schematischen Aufbau eines Verarbeitungssystems zum Erwärmen und zum Weiterverarbeiten von zumindest einem metallhaltigen Produkt unter Verwendung von konzentrierter Sonnenstrahlung gemäß einer weiteren Ausführungsform der vorliegenden Erfindung;
- Figur 8:: zeigt einen schematischen Aufbau eines Verarbeitungssystems zum Erwärmen und zum Weiterverarbeiten von zumindest einem metallhaltigen Produkt unter Verwendung von konzentrierter Sonnenstrahlung gemäß einer nochmals weiteren Ausführungsform der vorliegenden Erfindung;
- Figur 9:: zeigt einen schematischen Aufbau eines Verarbeitungssystems zum Erwärmen und zum Weiterverarbeiten von zumindest einem metallhaltigen Produkt unter Verwendung von konzentrierter Sonnenstrahlung gemäß einer nochmals weiteren Ausführungsform der vorliegenden Erfindung;
- Figur 10:: zeigt einen schematischen Aufbau eines Verarbeitungssystems zum Erwärmen und zum Weiterverarbeiten von zumindest einem metallhaltigen Produkt unter Verwendung von konzentrierter Sonnenstrahlung gemäß einer nochmals weiteren Ausführungsform der vorliegenden Erfindung; und
- Figur 11:: zeigt einen schematischen Aufbau eines Verarbeitungssystems zum Erwärmen und zum Weiterverarbeiten von zumindest einem metallhaltigen Produkt unter Verwendung von konzentrierter Sonnenstrahlung gemäß einer nochmals weiteren Ausführungsform der vorliegenden Erfindung.

In der nun folgenden Beschreibung bezeichnen gleiche Bezugszeichen gleiche Bauteile bzw. gleiche Merkmale, so dass eine in Bezug auf eine Figur durchgeführte Beschreibung bezüglich eines Bauteils auch für die anderen Figuren gilt, sodass eine wiederholende Beschreibung vermieden wird. Ferner sind einzelne Merkmale, die in Zusammenhang mit einer Ausführungsform beschrieben wurden, auch separat in anderen Ausführungsformen verwendbar.

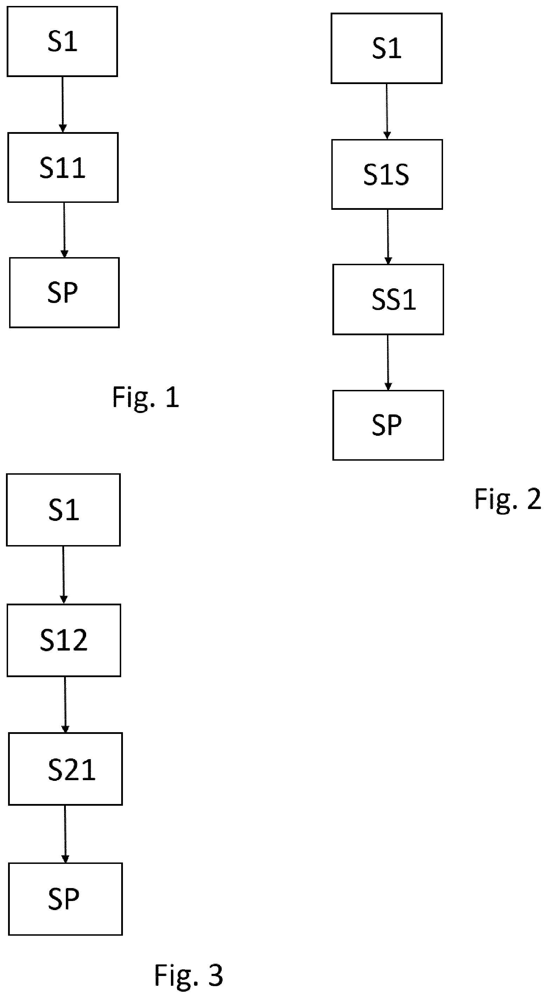

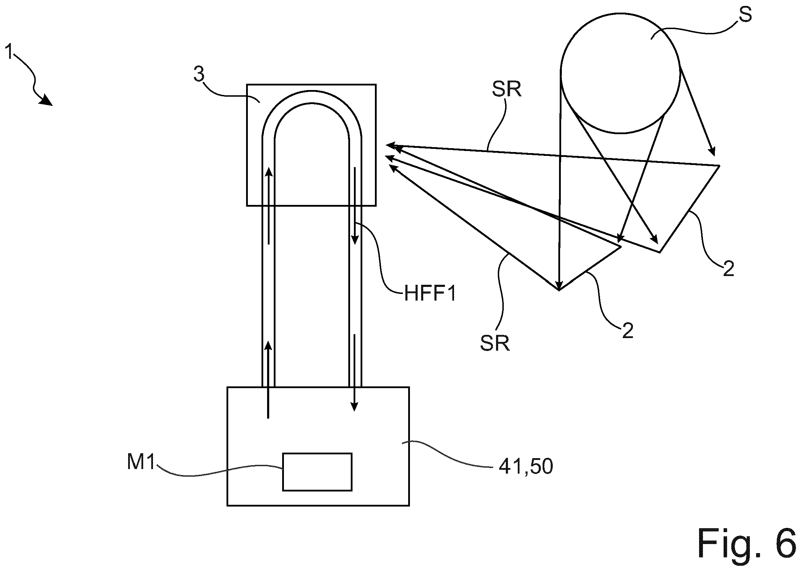

Figur 1 zeigt ein Verfahrensablaufdiagramm eines erfindungsgemäßen Verfahrens zum Erwärmen und Weiterverarbeiten eines metallhaltigen Produkts M1, M2 unter Verwendung von konzentrierter Sonnenstrahlung. Das Verfahren kann auf jeder der in den Figuren 6 bis 11 dargestellten Verarbeitungssysteme zum Erwärmen und zum Weiterverarbeiten von zumindest einem metallhaltigen Produkt M1, M2 unter Verwendung von konzentrierter Sonnenstrahlung ausgeführt werden.

In einem Verfahrensschritt S1 wird ein Primär-Wärmetransportfluid HTF1 mittels konzentrierter Sonnenstrahlung erwärmt. Hierzu wird ein Verarbeitungssystem 1 zum Erwärmen und zum Weiterverarbeiten von zumindest einem metallhaltigen Produkt M1 eine Fluiderwärmungseinrichtung 3 auf, die dazu ausgebildet ist, das Primär-Wärmetransportfluid HTF1 mittels konzentrierter Sonnenstrahlung zu erwärmen.

In den in den Figuren 6 bis 11 dargestellten Ausführungsbeispielen des Verarbeitungssystems 1 ist die Fluiderwärmungseinrichtung 3 als Absorberstation 3 ausgebildet, in der von der Sonne S emittierte Sonnenstrahlung SR konzentriert wird. Hierzu wird die Sonnenstrahlung SR von als Heliostaten 2 ausgebildete Reflektionseinrichtungen 2 auf/in die Fluiderwärmungseinrichtung 3 reflektiert. Das Primär-Wärmetransportfluid HTF1 durchläuft die Fluiderwärmungseinrichtung 3 und wird so durch die konzentrierte Sonnenstrahlung SR erwärmt.

Das Verarbeitungssystem 1 weist ferner eine Erwärmungseinrichtung 41 auf, die dazu ausgebildet ist, gemäß eines Verfahrensschritts S11 Wärme des Primär-Wärmetransportfluids HTF1 zumindest mittelbar auf das metallhaltige Produkt M1 zu übertragen, das in den dargestellten Ausführungsbeispielen in der Erwärmungseinrichtung 41 angeordnet ist. Hierzu zirkuliert das Primär-Wärmetransportfluid HTF1 zwischen der Fluiderwärmungseinrichtung 3 und der Erwärmungseinrichtung 41.

Ferner weist das Verarbeitungssystem 1 eine Verarbeitungseinrichtung 50 auf, in der der ein Verfahrensschritt SP zum Verarbeiten des erwärmten metallhaltigen Produkts M1 ausgeführt wird. In den dargestellten Ausführungsbeispielen sind die Erwärmungseinrichtungen und die Verarbeitungseinrichtungen stets kombiniert dargestellt und in einer Industrieanlage vereinigt.

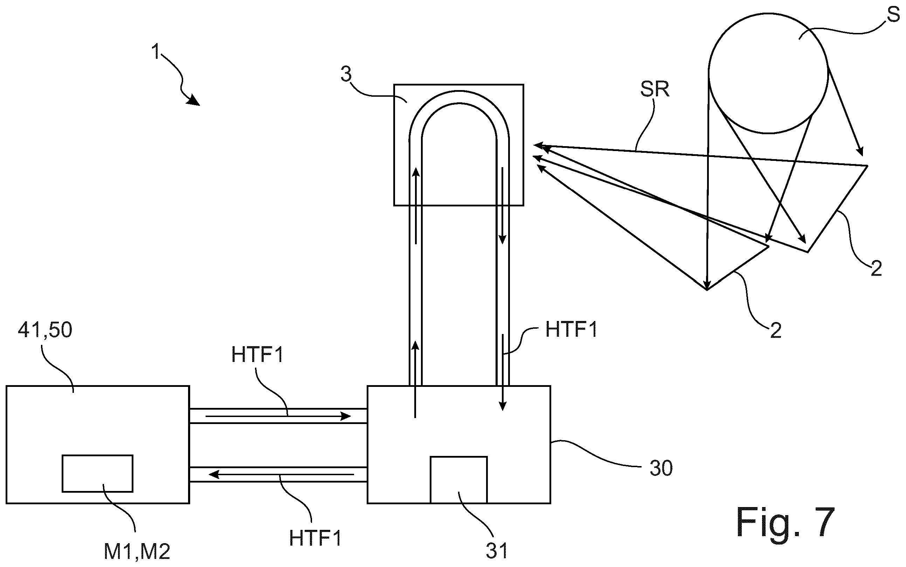

Das in Figur 7 dargestellte Verarbeitungssystem 1 ist dazu ausgebildet, das Verfahren auszuführen, dessen Verfahrensablaufdiagramm in Figur 2 dargestellt ist. Das in Figur 7 dargestellte Verarbeitungssystem 1 unterscheidet sich von dem in Figur 6 dargestellten Verarbeitungssystem 1 dadurch, dass dieses eine Wärmespeichereinrichtung 30 aufweist, wobei in einem Verfahrensschritt S1S Wärmeenergie des Primär-Wärmetransportfluids HTF1 zumindest mittelbar auf die Wärmespeichereinrichtung 30 zu übertragen wird. In der Wärmespeichereinrichtung 30 ist ein Wärmespeichermedium 31 angeordnet, das vorzugsweise eine große Wärmekapazität aufweist. Das Primär-Wärmetransportfluid 1 kann jedoch auch als Wärmespeichermedium 31 fungieren.Die Wärmespeichereinrichtung 30 wiederum ist mit der Erwärmungseinrichtung 41 wärmegekoppelt, indem ein Wärmetransportfluid zwischen der Wärmespeichereinrichtung 30 und der Erwärmungseinrichtung 41 zirkuliert. Im dargestellten Ausführungsbeispiel zirkuliert das Primär-Wärmetransportfluid HTF1 zwischen der Wärmespeichereinrichtung 30 und der Erwärmungseinrichtung 41, so dass gemäß einem Verfahrensschritt SS1 Wärmeenergie der Wärmespeichereinrichtung 30 auf das metallhaltige Produkt M1 übertragen wird.

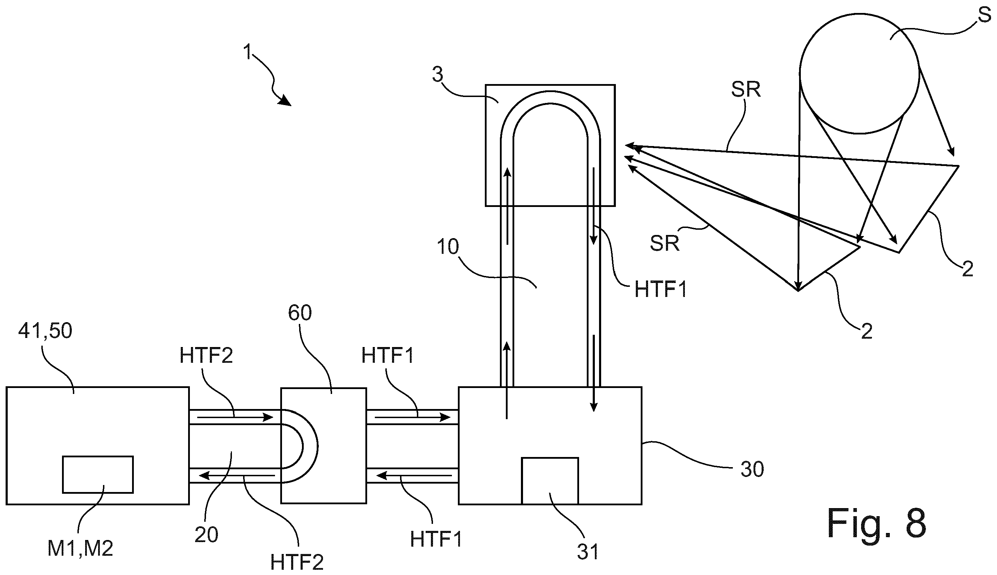

Das in Figur 8 dargestellte Verarbeitungssystem 1 ist dazu ausgebildet, das Verfahren auszuführen, dessen Verfahrensablaufdiagramm in Figur 3 dargestellt ist. Das in Figur 8 dargestellte Verarbeitungssystem 1 unterscheidet sich von dem in Figur 7 dargestellten Verarbeitungssystem 1 dadurch, dass das Verarbeitungssystem 1 eine Wärmetauschereinrichtung 60 aufweist, mittels der in einem Verfahrensschritt S12 Wärmeenergie des Primär-Wärmetransportfluids HTF1 auf ein Sekundär-Wärmetransportfluid HTF2 übertragbar ist. Hierzu ist die Fluiderwärmungseinrichtung 3 mit der Wärmetauschereinrichtung 60 mittels des in einem Primär-Fluidkreislauf 10 zirkulierendem Primär-Wärmetransportfluid (HTF1) wärmegekoppelt. Die Erwärmungseinrichtung 41 ist dazu ausgebildet, in einem Verfahrensschritt S21 Wärme des Sekundär-Wärmetransportfluids HTF2 zumindest mittelbar auf das metallhaltige Produkt M1 zu übertragen. Hierzu ist die Wärmetauschereinrichtung 60 mit der Erwärmungseinrichtung 41 mittels des in einem Sekundär-Fluidkreislauf 20 zirkulierendem Sekundär-Wärmetransportfluid HTF2 wärmegekoppelt.

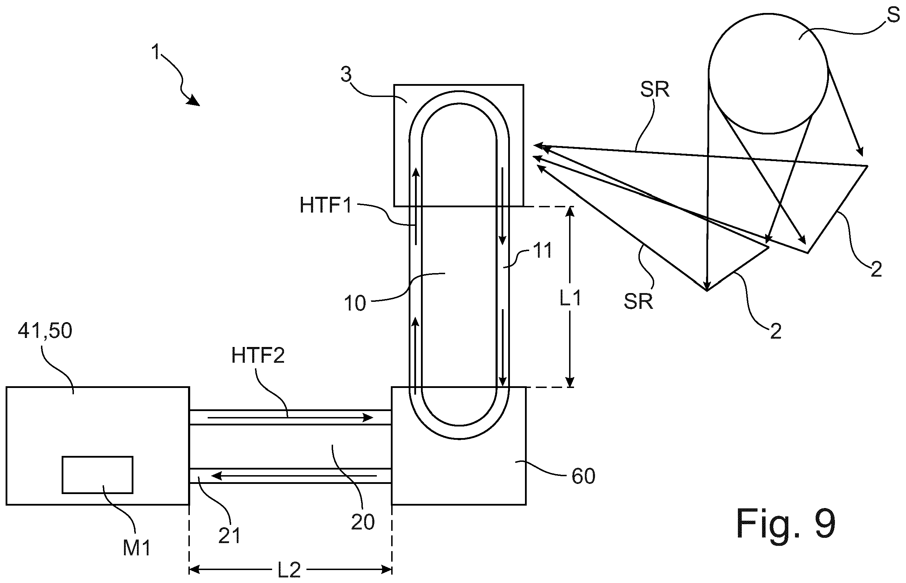

Das in Figur 9 dargestellte Verarbeitungssystem 1 unterscheidet sich von dem in Figur 8 dargestellten Verarbeitungssystem 1 dadurch, dass dieses keine Wärmespeichereinrichtung 30 aufweist, die zwischen der Fluiderwärmungseinrichtung 3 und der Wärmetauschereinrichtung 60 angeordnet ist. Jedoch kann das in Figur 9 dargestellte Verarbeitungssystem 1 auch die Wärmespeichereinrichtung 30 aufweisen, die die zwischen der Fluiderwärmungseinrichtung 3 und der Wärmetauschereinrichtung 60 angeordnet ist.

Aus Figur 9 ist ersichtlich, dass eine Primär-Fluidzulaufleitung 11 des Primär-Fluidkreislaufs 10, über die das Primär-Wärmetransportfluid HTF1 von der Fluiderwärmungseinrichtung 3 in Richtung der Wärmetauschereinrichtung 60 transportiert wird, eine erste Länge L1 aufweist. Ferner ist aus Figur 9 ersichtlich, dass eine Sekundär-Fluidzulaufleitung 21 des Sekundär-Fluidkreislaufs 20, über die das Sekundär-Wärmetransportfluid HTF2 von der Wärmetauschereinrichtung 60 in Richtung der Erwärmungseinrichtung 41 transportiert wird, eine zweite Länge L2 aufweist, die größer als die erste Länge L1 ist.

Folglich wird das Primär-Wärmetransportfluid HTF1 zu der Wärmetauschereinrichtung 60 über eine erste Wegstrecke L1 transportiert, wobei in der Wärmetauschereinrichtung 60 Wärmeenergie von dem Primär-Wärmetransportfluid HTF1 auf das Sekundär-Wärmetransportfluid HTF2 übertragen wird. Ferner wird des Sekundär-Wärmetransportfluids HTF2 zu der Erwärmungseinrichtung 41 über eine zweite Wegstrecke L2 transportiert, die größer als die erste Wegstrecke L1 ist, wobei in der Erwärmungseinrichtung 41 Wärmeenergie von dem Sekundär-Wärmetransportfluid HTF2 auf das metallische Produkt M1 übertragen wird.

Vorzugsweise wird als Sekundär-Wärmetransportfluid HTF2 ein Wärmetransportfluid verwendet, dessen Wärmekapazität größer ist als die Wärmekapazität des Primär-Wärmetransportfluids HTF1. Weiter vorzugsweise wird als Sekundär-Wärmetransportfluid HTF2 ein Wärmetransportfluid verwendet, dessen spezifische Wärmekapazität größer ist als die spezifische Wärmekapazität des Primär-Wärmetransportfluids HTF1. Weiter vorzugsweise wird als Sekundär-Wärmetransportfluid HTF2 ein Wärmetransportfluid verwendet, dessen Dichte größer ist als die Dichte des Primär-Wärmetransportfluids HTF1. Weiter vorzugsweise wird als Sekundär-Wärmetransportfluid HTF2 ein Wärmetransportfluid verwendet, dessen Produkt aus dessen Dichte und dessen Wärmekapazität größer ist als die das Produkt aus der Dichte und der Wärmekapazität des Primär-Wärmetransportfluids HTF1.

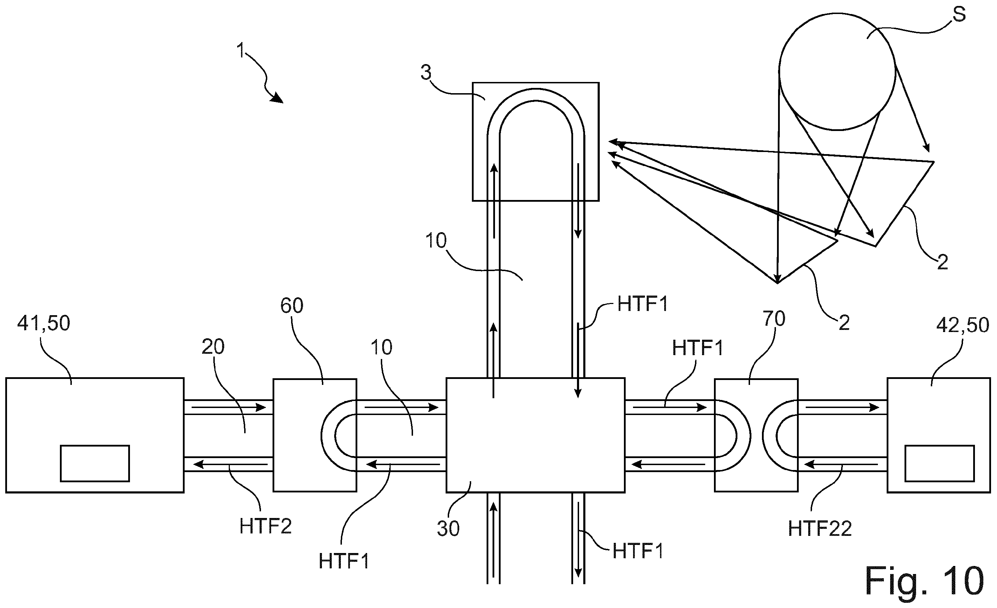

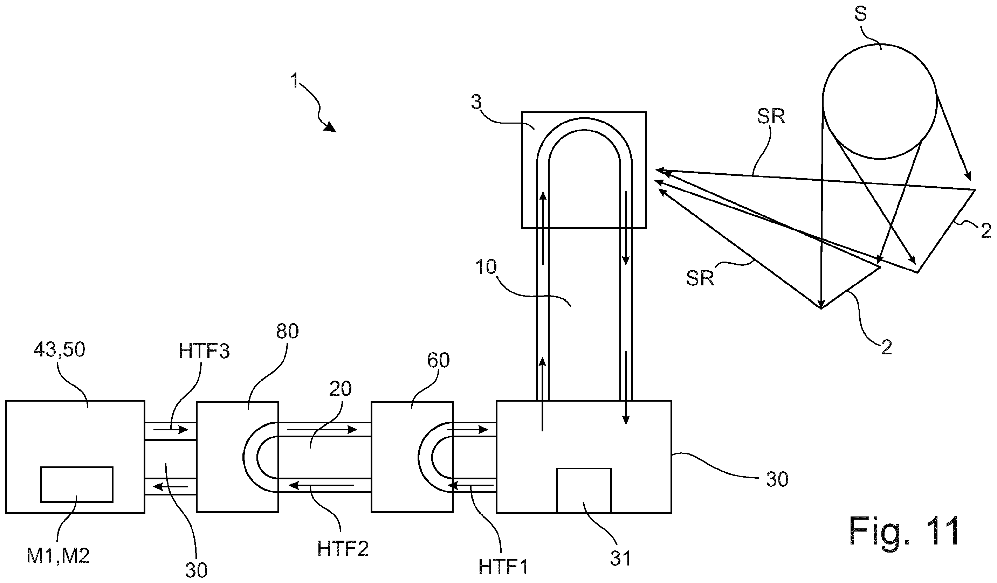

Die Verarbeitungssysteme 1, die in den Figuren 10 und 11 dargestellt sind, können entsprechend ausgebildet sein, so dass die mit Bezug auf Figur 9 beschriebenen Längenverhältnisse der ersten Längen L1 der Primär-Fluidzulaufleitungen 11 und der zweiten Längen L2 der Sekundär-Fluidzulaufleitungen 21 auch bei den in den Figuren 10 und 11 dargestellten Ausführungsbeispielen der Verarbeitungssysteme 1 realisiert sein können.

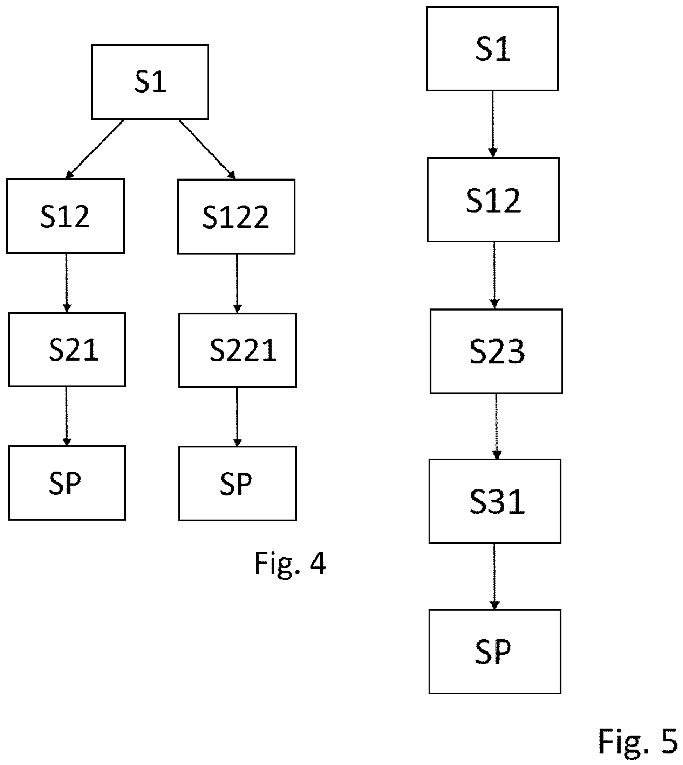

Das in Figur 10 dargestellte Verarbeitungssystem 1 ist dazu ausgebildet, das Verfahren auszuführen, dessen Verfahrensablaufdiagramm in Figur 4 dargestellt ist. Das in Figur 10 dargestellte Verarbeitungssystem 1 unterscheidet sich von dem in Figur 8 dargestellten Verarbeitungssystem 1 dadurch, dass das Verarbeitungssystem 1 eine zweite Wärmetauschereinrichtung 70 aufweist, die parallel zur Wärmetauschereinrichtung 60 eingerichtet ist, so dass gemäß des Verfahrensschritts S12 parallel Wärmeenergie des Primär-Wärmetransportfluids HTF1 mittels der Wärmetauschereinrichtung 60 auf das Sekundär-Wärmetransportfluid HTF2 und gemäß eines Verfahrensschritts S122 mittels der zweiten Wärmetauchereinrichtung 70 auf das zweite Sekundär-Wärmetransportfluid HTF22 übertragbar ist. Ferner weist das in Figur 10 dargestellte Verarbeitungssystem 1 eine zweite Erwärmungseinrichtung 42 auf, die dazu ausgebildet ist, gemäß eines Verfahrensschritts S221 Wärme des zweiten Sekundär-Wärmetransportfluids HTF22 zumindest mittelbar auf ein zweites metallhaltiges Produkt M2 zu übertragen.

Aus Figur 10 ist ferner ersichtlich, dass in die Wärmespeichereinrichtung 30 eine weitere Zulaufleitung und eine weitere Ablaufleitung zum Transport des Primär-Wärmetransportfluids vorgesehen sein können. Hierüber kann beispielsweise direkt eine Erwärmungsvorrichtung mittels des Primär-Wärmetransportfluids HTF1 versorgt werden. Ferner könnte über die weitere Zulaufleitung und eine weitere Ablaufleitung eine Stromerzeugungsvorrichtung mit Wärme des Primär-Wärmetransportfluids HTF1 versorgt werden.

Obschon in Figur 10 nicht dargestellt kann diese Ausführungsform auch so ausgebildet sein, dass eine Primär-Fluidzulaufleitung 11 eines Primär-Fluidkreislaufs 10, über die das Primär-Wärmetransportfluid HTF1 von der Fluiderwärmungseinrichtung 3 in Richtung der zweiten Wärmetauschereinrichtung 70 transportiert wird, eine dritte Länge L3 aufweist, wobei eine zweite Sekundär-Fluidzulaufleitung 212 eines zweiten Sekundär-Fluidkreislaufs 202, über die das zweite Sekundär-Wärmetransportfluid HTF22 von der zweiten Wärmetauschereinrichtung 70 in Richtung der zweiten Erwärmungseinrichtung 42, 43 transportiert wird, eine vierte Länge L4 aufweist, die größer als die dritte Länge L3 ist.

Folglich wird das Primär-Wärmetransportfluids HTF1 zu der zweiten Wärmetauschereinrichtung 70 über eine dritte Wegstrecke L3 transportiert, wobei in der zweiten Wärmetauschereinrichtung 70 Wärmeenergie von dem Primär-Wärmetransportfluid HTF1 auf das zweite Sekundär-Wärmetransportfluid HTF22 übertragen wird. Ferner wird das zweite Sekundär-Wärmetransportfluid HTF22 zu der Erwärmungseinrichtung 42 über eine vierte Wegstrecke L4 transportiert, die größer als die dritte Wegstrecke L3 ist, wobei in der Erwärmungseinrichtung 42 Wärmeenergie von dem zweiten Sekundär-Wärmetransportfluid HTF22 auf das zweite metallhaltige Produkt M2 übertragen wird.

Vorzugsweise wird als zweites Sekundär-Wärmetransportfluid HTF22 ein Wärmetransportfluid verwendet, dessen Wärmekapazität größer ist als die Wärmekapazität des Primär-Wärmetransportfluids HTF1.

Das in Figur 11 dargestellte Verarbeitungssystem 1 ist dazu ausgebildet, das Verfahren auszuführen, dessen Verfahrensablaufdiagramm in Figur 5 dargestellt ist. Das in Figur 11 dargestellte Verarbeitungssystem 1 unterscheidet sich von dem in Figur 8 dargestellten Verarbeitungssystem 1 dadurch, dass das Verarbeitungssystem 1 eine dritte Wärmetauschereinrichtung 80 aufweist.

In einem Verfahrensschritt S23 wird in der dritten Wärmetauschereinrichtung 80 Wärmeenergie des Sekundär-Wärmetransportfluids HTF2 auf ein Tertiär-Wärmetransportfluid HTF3 übertragen. Die Erwärmungseinrichtung 43 ist dazu ausgebildet, gemäß eines Verfahrensschritts S31 Wärme des Tertiär-Wärmetransportfluids HTF3 zumindest mittelbar auf das metallhaltige Produkt M1 zu übertragen.

### Bezugszeichenliste

- 1: Verarbeitungssystem
- 2: Reflektionseinrichtung / Heliostat
- 3: Fluiderwärmungseinrichtung
- 10: Primär-Fluidkreislauf
- 11: Primär-Fluidzulaufleitung
- 12: Primär-Fluidablaufleitung
- 20: Sekundär-Fluidkreislauf
- 21: Sekundär-Fluidzulaufleitung
- 22: Sekundär-Fluidablaufleitung
- 202: zweiter Sekundär-Fluidkreislauf
- 212: zweite Sekundär-Fluidzulaufleitung
- 222: zweite Sekundär-Fluidablaufleitung
- 30: Wärmespeichereinrichtung
- 31: Wärmespeichermedium
- 41: (erste) Erwärmungseinrichtung / erster Ofen
- 42: zweite Erwärmungseinrichtung / zweiter Ofen
- 43: dritte Erwärmungseinrichtung / dritter Ofen
- 50: Verarbeitungseinrichtung
- 60: (erste) Wärmetauschereinrichtung
- 70: zweite Wärmetauschereinrichtung
- 80: dritte Wärmetauschereinrichtung
- HTF1: Primär-Wärmetransportfluid
- HTF2: Sekundär-Wärmetransportfluid
- HTF22: zweites Sekundär-Wärmetransportfluid
- HTF3: Tertiär-Wärmetransportfluid
- M1: (erstes) metallhaltiges Produkt
- M2: zweites metallhaltiges Produkt
- L1: erste Wegstrecke / erste Länge
- L2: zweite Wegstrecke / zweite Länge
- L3: dritte Wegstrecke / dritte Länge
- L4: vierte Wegstrecke / vierte Länge

- S: Sonne
- SR: Sonnenstrahlung

- S1: Verfahrensschritt
- S11: Verfahrensschritt
- S122: Verfahrensschritt
- S1S: Verfahrensschritt
- S21: Verfahrensschritt
- S221: Verfahrensschritt
- S23: Verfahrensschritt
- S31: Verfahrensschritt
- SP: Verfahrensschritt
- SS1: Verfahrensschritt

## Patentansprüche

1. Verfahren zum Erwärmen und zum Weiterverarbeiten von zumindest einem metallhaltigen Produkt (M1, M2), wobei das Verfahren folgende Verfahrensschritte aufweist:
- Erwärmen (S1) eines Primär-Wärmetransportfluids (HTF1) mittels konzentrierter Sonnenstrahlung;
- Übertragen (S11, SS1, S21, S221, S31) von Wärmeenergie des Primär-Wärmetransportfluids (HTF1) auf das metallhaltige Produkt (M1, M2); und
- Verarbeiten (SP) des erwärmten metallhaltigen Produkts (M1, M2),
**dadurch gekennzeichnet, dass** das Verarbeiten (SP) des erwärmten metallischen Produkts (M1, M2) ein mechanisches Umformen und/oder Pressen und/oder Tempern und/oder Glühen ist.

2. Verfahren nach Anspruch 1, **gekennzeichnet durch** die folgenden Merkmale:
- Übertragen (S1S) von Wärmeenergie des Primär-Wärmetransportfluids (HTF1) auf eine Wärmespeichereinrichtung (30); und
- Übertragen (SS1) von Wärmeenergie der Wärmespeichereinrichtung (30) auf das metallhaltige Produkt (M1, M2).

3. Verfahren nach einem der vorhergehenden Ansprüchen, **gekennzeichnet durch** die folgenden Merkmale:
- Übertragen (S12) von Wärmeenergie des Primär-Wärmetransportfluids (HTF1) auf ein Sekundär-Wärmetransportfluid (HTF2, HTF22) in einer Wärmetauschereinrichtung (60); und
- Übertragen (S21) von Wärmeenergie des Sekundär-Wärmetransportfluids (HTF2, HTF22) auf das metallhaltige Produkt (M1, M2) in einer Erwärmungseinrichtung (41, 42, 43).

4. Verfahren nach Anspruch 3, **dadurch gekennzeichnet, dass** als Sekundär-Wärmetransportfluid (HTF2, HTF22) ein Wärmetransportfluid verwendet wird, dessen Wärmekapazität größer ist als die Wärmekapazität des Primär-Wärmetransportfluids (HTF1).

5. Verfahren nach Anspruch 3 oder 4, **gekennzeichnet durch** die folgenden Merkmale:
- Übertragen (S122) von Wärmeenergie des Primär-Wärmetransportfluids (HTF1) auf ein zweites Sekundär-Wärmetransportfluid (HTF22) in einer zweiten Wärmetauschereinrichtung (70), die parallel zur Wärmetauschereinrichtung (60) eingerichtet ist, so dass parallel Wärmeenergie des Primär-Wärmetransportfluids (HTF1) auf das Sekundär-Wärmetransportfluid (HTF2) und das zweite Sekundär-Wärmetransportfluid (HTF22) übertragen wird; und
- Übertragen (S221) von Wärmeenergie des zweiten Sekundär-Wärmetransportfluids (HTF22) auf ein zweites metallhaltiges Produkt (M2) in einer zweiten Erwärmungseinrichtung (42).

6. Verfahren nach einem der Ansprüche 3 bis 5, **gekennzeichnet durch** die folgenden Schritte:
- Transportieren des Primär-Wärmetransportfluids (HTF1) zu der Wärmetauschereinrichtung (60) über eine erste Wegstrecke (L1), wobei in der Wärmetauschereinrichtung (60) Wärmeenergie von dem Primär-Wärmetransportfluid (HTF1) auf das Sekundär-Wärmetransportfluid (HTF2) übertragen wird; und
- Transportieren des Sekundär-Wärmetransportfluids (HTF2) zu der Erwärmungseinrichtung (41, 42, 43) über eine zweite Wegstrecke (L2), die größer als die erste Wegstrecke (L1) ist, wobei in der Erwärmungseinrichtung (41, 42, 43) Wärmeenergie von dem Sekundär-Wärmetransportfluid (HTF2) auf das metallische Produkt (M1, M2) übertragen wird.

7. Verfahren nach einem der Ansprüche 5 oder 6, **gekennzeichnet durch** die folgenden Schritte:
- Transportieren des Primär-Wärmetransportfluids (HTF1) zu der zweiten Wärmetauschereinrichtung (70) über eine dritte Wegstrecke (L3), wobei in der zweiten Wärmetauschereinrichtung (70) Wärmeenergie von dem Primär-Wärmetransportfluid (HTF1) auf das zweite Sekundär-Wärmetransportfluid (HTF22) übertragen wird; und
- Transportieren des zweiten Sekundär-Wärmetransportfluids (HTF22) zu der Erwärmungseinrichtung (41, 42, 43) über eine vierte Wegstrecke (L4), die größer als die dritte Wegstrecke (L3) ist, wobei in der Erwärmungseinrichtung (41, 42, 43) Wärmeenergie von dem zweiten Sekundär-Wärmetransportfluid (HTF22) auf das zweite metallhaltige Produkt (M2) übertragen wird.

8. Verfahren nach einem der Ansprüche 3 bis 7, **gekennzeichnet durch** die folgenden Merkmale:
- Übertragen (S23) von Wärmeenergie des Sekundär-Wärmetransportfluids (HTF22) auf ein Tertiär-Wärmetransportfluid (HTF3) in einer dritten Wärmetauschereinrichtung (80); und
- Übertragen (S31) von Wärmeenergie des Tertiär-Wärmetransportfluids (HTF3) auf das metallhaltige Produkt (M1, M2) in einer dritten Erwärmungseinrichtung (43).

9. Verfahren nach Anspruch 8, **dadurch gekennzeichnet, dass** als Tertiär-Wärmetransportfluid (HTF3) ein Wärmetransportfluid verwendet wird, dessen Wärmekapazität sich von der Wärmekapazität des Sekundär-Wärmetransportfluids (HTF2, HTF22) unterscheidet.

10. Verarbeitungssystem (1) zum Erwärmen und zum Weiterverarbeiten von zumindest einem metallhaltigen Produkt (M1, M2), aufweisend:
- eine Fluiderwärmungseinrichtung (3), die dazu ausgebildet ist, ein Primär-Wärmetransportfluid (HTF1) mittels konzentrierter Sonnenstrahlung zu erwärmen;
- eine Erwärmungseinrichtung (41, 42, 43), die dazu ausgebildet ist, Wärme des Primär-Wärmetransportfluids (HTF1) zumindest mittelbar auf das metallhaltige Produkt (M1, M2) zu übertragen; und
- eine Verarbeitungseinrichtung (50) zum Verarbeiten des erwärmten metallhaltigen Produkts (M1, M2), wobei die Verarbeitungseinrichtung (50) als Umformeinrichtung und/oder Einrichtung zum Tempern und/oder zum Glühen ausgebildet ist.

11. Verarbeitungssystem (1) nach Anspruch 10, **dadurch gekennzeichnet, dass** das Verarbeitungssystem (1) eine Wärmespeichereinrichtung (30) aufweist, wobei das Verarbeitungssystem (1) dazu ausgebildet ist, Wärmeenergie des Primär-Wärmetransportfluids (HTF1) zumindest mittelbar auf die Wärmespeichereinrichtung (30) zu übertragen.

12. Verarbeitungssystem (1) nach Anspruch 10 oder 11, **gekennzeichnet durch** die folgenden Merkmale:
- das Verarbeitungssystem (1) weist eine Wärmetauschereinrichtung (60, 70) auf, mittels der Wärmeenergie des Primär-Wärmetransportfluids (HTF1) auf ein Sekundär-Wärmetransportfluid (HTF2, HTF22) übertragbar ist; und
- die Erwärmungseinrichtung (41, 42, 43) ist dazu ausgebildet, Wärme des Sekundär-Wärmetransportfluids (HTF2, HTF22) zumindest mittelbar auf das metallhaltige Produkt (M1, M2) zu übertragen.

13. Verarbeitungssystem (1) nach Anspruch 12, **gekennzeichnet durch** die folgenden Merkmale:
- das Verarbeitungssystem (1) weist eine zweite Wärmetauschereinrichtung (70) auf, die parallel zur Wärmetauschereinrichtung (60) eingerichtet ist, so dass parallel Wärmeenergie des Primär-Wärmetransportfluids (HTF1) mittels der Wärmetauschereinrichtung (60) auf das Sekundär-Wärmetransportfluid (HTF2) und mittels der zweiten Wärmetauchereinrichtung (70) auf das zweite Sekundär-Wärmetransportfluid (HTF22) übertragbar ist; und
- das Verarbeitungssystem (1) weist eine zweite Erwärmungseinrichtung (42) auf, die dazu ausgebildet ist, Wärme des zweiten Sekundär-Wärmetransportfluids (HTF22) zumindest mittelbar auf ein zweites metallhaltiges Produkt (M2) zu übertragen.

14. Verarbeitungssystem (1) nach einem der Ansprüche 12 oder 13, **gekennzeichnet durch** die folgenden Merkmale:
- die Fluiderwärmungseinrichtung (3) ist mit der Wärmetauschereinrichtung (60) mittels des in einem Primär-Fluidkreislauf (10) zirkulierendem Primär-Wärmetransportfluid (HTF1) wärmegekoppelt;
- die Wärmetauschereinrichtung (60) ist mit der Erwärmungseinrichtung (41) mittels des in einem Sekundär-Fluidkreislauf (20) zirkulierendem Sekundär-Wärmetransportfluid (HTF2) wärmegekoppelt;
- eine Primär-Fluidzulaufleitung (11) des Primär-Fluidkreislaufs (10), über die das Primär-Wärmetransportfluid (HTF1) von der Fluiderwärmungseinrichtung (3) in Richtung der Wärmetauschereinrichtung (60) transportiert wird, weist eine erste Länge (L1) auf;
- eine Sekundär-Fluidzulaufleitung (21) des Sekundär-Fluidkreislaufs (20), über die das Sekundär-Wärmetransportfluid (HTF2) von der Wärmetauschereinrichtung (60) in Richtung der Erwärmungseinrichtung (41, 42, 43) transportiert wird, weist eine zweite Länge (L2) auf, die größer als die erste Länge (L1) ist.

15. Verarbeitungssystem (1) nach Anspruch 13 oder 14, **gekennzeichnet durch** die folgenden Merkmale:
- die Fluiderwärmungseinrichtung (3) ist mit der zweiten Wärmetauschereinrichtung (70) mittels des in einem Primär-Fluidkreislauf (10) zirkulierendem Primär-Wärmetransportfluid (HTF1) wärmegekoppelt;
- die zweite Wärmetauschereinrichtung (70) ist mit einer zweiten Erwärmungseinrichtung (42, 43) mittels des in einem zweiten Sekundär-Fluidkreislauf (20) zirkulierendem zweiten Sekundär-Wärmetransportfluid (HTF22) wärmegekoppelt;
- eine Primär-Fluidzulaufleitung (11) des Primär-Fluidkreislaufs (10), über die das Primär-Wärmetransportfluid (HTF1) von der Fluiderwärmungseinrichtung (3) in Richtung der zweiten Wärmetauschereinrichtung (70) transportiert wird, weist eine dritte Länge (L3) auf;
- eine zweite Sekundär-Fluidzulaufleitung (212) des zweiten Sekundär-Fluidkreislaufs (202), über die das zweite Sekundär-Wärmetransportfluid (HTF22) von der zweiten Wärmetauschereinrichtung (70) in Richtung der zweiten Erwärmungseinrichtung (42, 43) transportiert wird, weist eine vierte Länge (L4) auf, die größer als die dritte Länge (L3) ist.

16. Verarbeitungssystem (1) nach einem der Ansprüche 12 bis 15, **gekennzeichnet durch** die folgenden Merkmale:
- das Verarbeitungssystem (1) weist eine dritte Wärmetauschereinrichtung (80) auf, mittels der Wärmeenergie des Sekundär-Wärmetransportfluids (HTF2, HTF22) auf ein Tertiär-Wärmetransportfluid (HTF3) übertragbar ist; und
- die Erwärmungseinrichtung (41, 42, 43) ist dazu ausgebildet, Wärme des Tertiär-Wärmetransportfluids (HTF3) zumindest mittelbar auf das metallhaltige Produkt (M1, M2) zu übertragen.

## Claims

1. A method for heating and further processing at least one metal-containing product (M1, M2), wherein the method comprises the following steps:
- heating (S1) a primary heat transfer fluid (HTF1) using concentrated solar radiation;
- transferring (S11, SS1, S21, S221, S31) thermal energy from the primary heat transfer fluid (HTF1) to the metal-containing product (M1, M2); and
- processing (SP) the heated metal-containing product (M1, M2),
**characterized in that** the processing (SP) of the heated metal-containing product (M1, M2) comprises mechanical forming and/or pressing and/or tempering and/or annealing.

2. Method according to claim 1, **characterized by** the following features:
- transferring (S1S) thermal energy from the primary heat transfer fluid (HTF1) to a heat storage device (30); and
- transferring (SS1) thermal energy from the heat storage device (30) to the metal-containing product (M1, M2).

3. Method according to any one of the preceding claims, **characterized by** the following features:
- transferring (S12) thermal energy from the primary heat transfer fluid (HTF1) to a secondary heat transfer fluid (HTF2, HTF22) in a heat exchanger (60); and
- transferring (S21) thermal energy from the secondary heat transfer fluid (HTF2, HTF22) to the metal-containing product (M1, M2) in a heating device (41, 42, 43).

4. Method according to claim 3, **characterized in that** a heat transfer fluid is used as the secondary heat transfer fluid (HTF2, HTF22) whose heat capacity is greater than the heat capacity of the primary heat transfer fluid (HTF1).

5. Method according to claim 3 or 4, **characterized by** the following features:
- transferring (S122) thermal energy from the primary heat transfer fluid (HTF1) to a second secondary heat transfer fluid (HTF22) in a second heat exchanger (70), which is arranged in parallel with the heat exchanger (60), such that heat energy from the primary heat transfer fluid (HTF1) is transferred in parallel to the secondary heat transfer fluid (HTF2) and the second secondary heat transfer fluid (HTF22); and
- transferring (S221) thermal energy from the second secondary heat transfer fluid (HTF22) to a second metal-containing product (M2) in a second heating device (42).

6. Method according to any one of claims 3 through 5, **characterized by** the following steps:
- transporting the primary heat transfer fluid (HTF1) to the heat exchanger (60) over a first path (L1), wherein, in the heat exchanger (60), thermal energy is transferred from the primary heat transfer fluid (HTF1) to the secondary heat transfer fluid (HTF2); and
- transporting the secondary heat transfer fluid (HTF2) to the heating device (41, 42, 43) over a second path (L2), which is longer than the first path (L1), wherein in the heating device (41, 42, 43) thermal energy is transferred from the secondary heat transfer fluid (HTF2) to the metal product (M1, M2).

7. Method according to any one of claims 5 or 6, **characterized by** the following steps:
- transporting the primary heat transfer fluid (HTF1) to the second heat exchanger (70) via a third path (L3), wherein in the second heat exchanger (70), thermal energy is transferred from the primary heat transfer fluid (HTF1) to the second secondary heat transfer fluid (HTF22); and
- transporting the second secondary heat transfer fluid (HTF22) to the heating device (41, 42, 43) via a fourth path (L4) that is longer than the third path (L3), wherein, in the heating device (41, 42, 43), thermal energy is transferred from the second secondary heat transfer fluid (HTF22) to the second metal-containing product (M2).

8. Method according to any one of claims 3 through 7, **characterized by** the following features:
- transferring (S23) thermal energy from the secondary heat transfer fluid (HTF22) to a tertiary heat transfer fluid (HTF3) in a third heat exchanger (80); and
- transferring (S31) thermal energy from the tertiary heat transfer fluid (HTF3) to the metal-containing product (M1, M2) in a third heating device (43).

9. Method according to claim 8, **characterized in that** a heat transfer fluid is used as the tertiary heat transfer fluid (HTF3) whose heat capacity differs from the heat capacity of the secondary heat transfer fluid (HTF2, HTF22).

10. A processing system (1) for heating and further processing at least one metal-containing product (M1, M2), comprising:
- a fluid heating device (3) configured to heat a primary heat transfer fluid (HTF1) using concentrated solar radiation;
- a heating device (41, 42, 43) configured to transfer heat from the primary heat transfer fluid (HTF1) at least indirectly to the metal-containing product (M1, M2); and
- a processing device (50) for processing the heated metal-containing product (M1, M2), wherein the processing device (50) is configured as a forming device and/or a device for tempering and/or annealing.

11. Processing system (1) according to claim 10, **characterized in that** the processing system (1) comprises a heat storage device (30), wherein the processing system (1) is configured to transfer thermal energy from the primary heat transfer fluid (HTF1) at least indirectly to the heat storage device (30).

12. Processing system (1) according to claim 10 or 11, **characterized by** the following features:
- the processing system (1) comprises a heat exchanger (60, 70) by means of which thermal energy from the primary heat transfer fluid (HTF1) can be transferred to a secondary heat transfer fluid (HTF2, HTF22); and
- the heating device (41, 42, 43) is configured to transfer heat from the secondary heat transfer fluid (HTF2, HTF22) at least indirectly to the metal-containing product (M1, M2).

13. Processing system (1) according to claim 12, **characterized by** the following features:
- the processing system (1) comprises a second heat exchanger (70) arranged in parallel with the heat exchanger (60), such that, in parallel, thermal energy from the primary heat transfer fluid (HTF1) is transferred via the heat exchanger (60) to the secondary heat transfer fluid (HTF2) and, by means of the second heat exchanger (70), to the second secondary heat transfer fluid (HTF22); and
- the processing system (1) comprises a second heating device (42) configured to transfer heat from the second secondary heat transfer fluid (HTF22) at least indirectly to a second metal-containing product (M2).

14. Processing system (1) according to any one of claims 12 or 13, **characterized by** the following features:
- the fluid heating device (3) is thermally coupled to the heat exchanger (60) by means of the primary heat transfer fluid (HTF1) circulating in a primary fluid circuit (10);
- the heat exchanger (60) is thermally coupled to the heating device (41) by means of the secondary heat transfer fluid (HTF2) circulating in a secondary fluid circuit (20);
- a primary fluid supply line (11) of the primary fluid circuit (10), through which the primary heat transfer fluid (HTF1) is transported from the fluid heating device (3) toward the heat exchanger (60), has a first length (L1);
- a secondary fluid supply line (21) of the secondary fluid circuit (20), through which the secondary heat transfer fluid (HTF2) is transported from the heat exchanger (60) toward the heating device (41, 42, 43) has a second length (L2) that is greater than the first length (L1).

15. Processing system (1) according to claim 13 or 14, **characterized by** the following features:
- the fluid heating device (3) is thermally coupled to the second heat exchanger (70) by means of the primary heat transfer fluid (HTF1) circulating in a primary fluid circuit (10);
- the second heat exchanger (70) is thermally coupled to a second heating device (42, 43) by means of the second secondary heat transfer fluid (HTF22) circulating in a second secondary fluid circuit (20);
- a primary fluid inlet line (11) of the primary fluid circuit (10), through which the primary heat transfer fluid (HTF1) is transported from the fluid heating device (3) toward the second heat exchanger (70), has a third length (L3);
- a second secondary fluid supply line (212) of the second secondary fluid circuit (202), through which the second secondary heat transfer fluid (HTF22) is transported from the second heat exchanger (70) toward the second heating device (42, 43), has a fourth length (L4) that is greater than the third length (L3).

16. Processing system (1) according to any one of claims 12 through 15, **characterized by** the following features:
- the processing system (1) comprises a third heat exchanger (80) by means of which thermal energy from the secondary heat transfer fluid (HTF2, HTF22) can be transferred to a tertiary heat transfer fluid (HTF3); and
- the heating device (41, 42, 43) is configured to transfer heat from the tertiary heat transfer fluid (HTF3) at least indirectly to the metal-containing product (M1, M2).

## Revendications

1. Procédé permettant le chauffage et le traitement ultérieur d'au moins un produit contenant du métal (M1, M2), dans lequel le procédé présente les étapes de procédé suivantes :
- chauffage (S1) d'un fluide de transport de chaleur primaire (HTF1) au moyen d'un rayonnement solaire concentré ;
- transfert (S11, SS1, S21, S221, S31) de l'énergie thermique du fluide de transport de chaleur primaire (HTF1) au produit contenant du métal (M1, M2) ; et
- traitement (SP) du produit contenant du métal (M1, M2) chauffé,
**caractérisé en ce que** le traitement (SP) du produit métallique (M1, M2) chauffé est un formage mécanique et/ou un pressage et/ou un vieillissement et/ou un recuit.

2. Procédé selon la revendication 1, **caractérisé par** les caractéristiques suivantes :
- transfert (S1S) de l'énergie thermique du fluide de transport de chaleur primaire (HTF1) à un appareil d'accumulation de chaleur (30) ; et
- transfert (SS1) de l'énergie thermique de l'appareil d'accumulation de chaleur (30) au produit contenant du métal (M1, M2).

3. Procédé selon l'une des revendications précédentes, **caractérisé par** les caractéristiques suivantes :
- transfert (S12) de l'énergie thermique du fluide de transport de chaleur primaire (HTF1) à un fluide de transport de chaleur secondaire (HTF2, HTF22) dans un appareil d'échange de chaleur (60) ; et
- transfert (S21) de l'énergie thermique du fluide de transport de chaleur secondaire (HTF2, HTF22) au produit contenant du métal (M1, M2) dans un appareil de chauffage (41, 42, 43).

4. Procédé selon la revendication 3, **caractérisé en ce qu'un** fluide de transport de chaleur dont la capacité thermique est supérieure à la capacité thermique du fluide de transport de chaleur primaire (HTF1) est utilisé comme fluide de transport de chaleur secondaire (HTF2, HTF22).

5. Procédé selon la revendication 3 ou 4, **caractérisé par** les caractéristiques suivantes :
- transfert (S122) de l'énergie thermique du fluide de transport de chaleur primaire (HTF1) à un second fluide de transport de chaleur secondaire (HTF22) dans un deuxième appareil d'échange de chaleur (70), lequel est disposé de manière à être parallèle à l'appareil d'échange de chaleur (60) de sorte que l'énergie thermique du fluide de transport de chaleur primaire (HTF1) est transférée parallèlement au fluide de transport de chaleur secondaire (HTF2) et au second fluide de transport de chaleur secondaire (HTF22) ; et
- transfert (S221) de l'énergie thermique du second fluide de transport de chaleur secondaire (HTF22) à un second produit contenant du métal (M2) dans un deuxième appareil de chauffage (42).

6. Procédé selon l'une des revendications 3 à 5, **caractérisé par** les étapes suivantes :
- transport du fluide de transport de chaleur primaire (HTF1) vers l'appareil d'échange de chaleur (60) sur une première distance (L1), dans lequel, dans l'appareil d'échange de chaleur (60), l'énergie thermique est transférée du fluide de transport de chaleur primaire (HTF1) au fluide de transport de chaleur secondaire (HTF2) ; et
- transport du fluide de transport de chaleur secondaire (HTF2) vers l'appareil de chauffage (41, 42, 43) sur une deuxième distance (L2) qui est supérieure à la première distance (L1), dans lequel, dans l'appareil de chauffage (41, 42, 43), l'énergie thermique est transférée du fluide de transport de chaleur secondaire (HTF2) au produit métallique (M1, M2).

7. Procédé selon l'une des revendications 5 ou 6, **caractérisé par** les étapes suivantes :
- transport du fluide de transport de chaleur primaire (HTF1) vers le deuxième appareil d'échange de chaleur (70) sur une troisième distance (L3), dans lequel, dans le deuxième appareil d'échange de chaleur (70), l'énergie thermique est transférée du fluide de transport de chaleur primaire (HTF1) au second fluide de transport de chaleur secondaire (HTF22) ; et
- transport du second fluide de transport de chaleur secondaire (HTF22) vers l'appareil de chauffage (41, 42, 43) sur une quatrième distance (L4) qui est supérieure à la troisième distance (L3), dans lequel, dans l'appareil de chauffage (41, 42, 43), l'énergie thermique est transférée du second fluide de transport de chaleur secondaire (HTF22) au second produit contenant du métal (M2).

8. Procédé selon l'une des revendications 3 à 7, **caractérisé par** les caractéristiques suivantes :
- transfert (S23) de l'énergie thermique du fluide de transport de chaleur secondaire (HTF22) à un fluide de transport de chaleur tertiaire (HTF3) dans un troisième appareil d'échange de chaleur (80) ; et
- transfert (S31) de l'énergie thermique du fluide de transport de chaleur tertiaire (HTF3) au produit contenant du métal (M1, M2) dans un troisième appareil de chauffage (43).

9. Procédé selon la revendication 8, **caractérisé en ce qu'un** fluide de transport de chaleur dont la capacité thermique est différente de la capacité thermique du fluide de transport de chaleur secondaire (HTF2, HTF22) est utilisé comme fluide de transport de chaleur tertiaire (HTF3).

10. Système de traitement (1) permettant le chauffage et le traitement ultérieur d'au moins un produit contenant du métal (M1, M2), présentant :
- un appareil de chauffage de fluide (3) qui est configuré pour chauffer un fluide de transport de chaleur primaire (HTF1) au moyen d'un rayonnement solaire concentré ;
- un appareil de chauffage (41, 42, 43) qui est configuré pour transférer, au moins indirectement, de la chaleur du fluide de transport de chaleur primaire (HTF1) au produit contenant du métal (M1, M2) ; et
- un appareil de traitement (50) permettant le traitement du produit contenant du métal (M1, M2) chauffé, dans lequel l'appareil de traitement (50) est réalisé sous forme d'appareil de formage et/ou d'appareil permettant le vieillissement et/ou permettant le recuit.

11. Système de traitement (1) selon la revendication 10, **caractérisé en ce que** le système de traitement (1) présente un appareil d'accumulation de chaleur (30), dans lequel le système de traitement (1) est configuré pour transférer, au moins indirectement, de l'énergie thermique du fluide de transport de chaleur primaire (HTF1) à l'appareil d'accumulation de chaleur (30).

12. Système de traitement (1) selon la revendication 10 ou 11, **caractérisé par** les caractéristiques suivantes :
- le système de traitement (1) présente un appareil d'échange de chaleur (60, 70) au moyen duquel l'énergie thermique du fluide de transport de chaleur primaire (HTF1) peut être transférée à un fluide de transport de chaleur secondaire (HTF2, HTF22) ; et
- l'appareil de chauffage (41, 42, 43) est configuré pour transférer, au moins indirectement, de la chaleur du fluide de transport de chaleur secondaire (HTF2, HTF22) au produit contenant du métal (M1, M2).

13. Système de traitement (1) selon la revendication 12, **caractérisé par** les caractéristiques suivantes :
- le système de traitement (1) présente un deuxième appareil d'échange de chaleur (70), lequel est disposé de manière à être parallèle à l'appareil d'échange de chaleur (60) de sorte que l'énergie thermique du fluide de transport de chaleur primaire (HTF1) peut être transférée, parallèlement, au fluide de transport de chaleur secondaire (HTF2) au moyen de l'appareil d'échange de chaleur (60) et au second fluide de transport de chaleur secondaire (HTF22) au moyen du deuxième appareil d'échange de chaleur (70) ; et
- le système de traitement (1) présente un deuxième appareil de chauffage (42) qui est configuré pour transférer, au moins indirectement, de la chaleur du second fluide de transport de chaleur secondaire (HTF22) à un second produit contenant du métal (M2).

14. Système de traitement (1) selon l'une des revendications 12 ou 13,
**caractérisé par** les caractéristiques suivantes :
- l'appareil de chauffage de fluide (3) est accouplé thermiquement à l'appareil d'échange de chaleur (60) au moyen du fluide de transport de chaleur primaire (HTF1) circulant dans un circuit de fluide primaire (10) ;
- l'appareil d'échange de chaleur (60) est accouplé thermiquement à l'appareil de chauffage (41) au moyen du fluide de transport de chaleur secondaire (HTF2) circulant dans un circuit de fluide secondaire (20) ;
- une conduite d'amenée de fluide primaire (11) du circuit de fluide primaire (10), par l'intermédiaire de laquelle le fluide de transport de chaleur primaire (HTF1) est transporté depuis l'appareil de chauffage de fluide (3) en direction de l'appareil d'échange de chaleur (60), présente une première longueur (L1) ;
- une conduite d'amenée de fluide secondaire (21) du circuit de fluide secondaire (20), par l'intermédiaire de laquelle le fluide de transport de chaleur secondaire (HTF2) est transporté depuis l'appareil d'échange de chaleur (60) en direction de l'appareil de chauffage (41, 42, 43), présente une deuxième longueur (L2) qui est supérieure à la première longueur (L1).

15. Système de traitement (1) selon la revendication 13 ou 14, **caractérisé par** les caractéristiques suivantes :
- l'appareil de chauffage de fluide (3) est accouplé thermiquement au deuxième appareil d'échange de chaleur (70) au moyen du fluide de transport de chaleur primaire (HTF1) circulant dans un circuit de fluide primaire (10) ;
- le deuxième appareil d'échange de chaleur (70) est accouplé thermiquement à un deuxième appareil de chauffage (42, 43) au moyen du second fluide de transport de chaleur secondaire (HTF22) circulant dans un second circuit de fluide secondaire (20) ;
- une conduite d'amenée de fluide primaire (11) du circuit de fluide primaire (10), par l'intermédiaire de laquelle le fluide de transport de chaleur primaire (HTF1) est transporté depuis l'appareil de chauffage de fluide (3) en direction du deuxième appareil d'échange de chaleur (70), présente une troisième longueur (L3) ;
- une seconde conduite d'amenée de fluide secondaire (212) du second circuit de fluide secondaire (202), par l'intermédiaire de laquelle le second fluide de transport de chaleur secondaire (HTF22) est transporté depuis le deuxième appareil d'échange de chaleur (70) en direction du deuxième appareil de chauffage (42, 43), présente une quatrième longueur (L4) qui est supérieure à la troisième longueur (L3).

16. Système de traitement (1) selon l'une des revendications 12 à 15,
**caractérisé par** les caractéristiques suivantes :
- le système de traitement (1) présente un troisième appareil d'échange de chaleur (80) au moyen duquel l'énergie thermique du fluide de transport de chaleur secondaire (HTF2, HTF22) peut être transférée à un fluide de transport de chaleur tertiaire (HTF3) ; et
- l'appareil de chauffage (41, 42, 43) est configuré pour transférer, au moins indirectement, de la chaleur du fluide de transport de chaleur tertiaire (HTF3) au produit contenant du métal (M1, M2).
